(19) **Europäisches Patentamt / European Patent Office / Office européen des brevets**

(11) **EP 4 022 282 B1**

(12) # EUROPÄISCHE PATENTSCHRIFT

(45) Veröffentlichungstag und Bekanntmachung des Hinweises auf die Patenterteilung:
**26.02.2025  Patentblatt 2025/09**

(21) Anmeldenummer: **20768285.7**

(22) Anmeldetag: **31.08.2020**

(51) Internationale Patentklassifikation (IPC):
**G01N 21/17** (2006.01)     **G01N 29/24** (2006.01)
**G01F 1/684** (2006.01)

(52) Gemeinsame Patentklassifikation (CPC):
**G01N 21/1702; G01F 1/6845; G01N 29/2425;**
G01N 2021/1704; G01N 2021/1708

(86) Internationale Anmeldenummer:
**PCT/EP2020/074205**

(87) Internationale Veröffentlichungsnummer:
**WO 2021/038099 (04.03.2021 Gazette 2021/09)**

(54) **PHOTOAKUSTISCHER GASSENSOR, HERSTELLUNGSVERFAHREN UND GASANALYSE**

PHOTOACOUSTIC GAS SENSOR, MANUFACTURING METHOD AND GAS ANALYSIS

CAPTEUR DE GAZ PHOTO-ACOUSTIQUE, METHODE DE FABRICATION ET ANALYSE DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2019  EP 19194295**

(43) Veröffentlichungstag der Anmeldung:
**06.07.2022  Patentblatt 2022/27**

(73) Patentinhaber: **Hahn-Schickard-Gesellschaft für angewandte Forschung e. V.
70569 Stuttgart (DE)**

(72) Erfinder:
• **DEHÉ, Alfons
  72770 Reutlingen (DE)**
• **BITTNER, Achim
  74080 Heilbronn (DE)**
• **CASTELLANOS, Lenny
  78727 Oberndorf am Neckar (DE)**
• **BILLAT, Sophie
  78052 Villingen-Schwenningen OT Weilersbach (DE)**
• **HEDRICH, Frank
  78052 Villingen-Schwenningen (DE)**

(74) Vertreter: **Hertin und Partner
Rechts- und Patentanwälte PartG mbB
Kurfürstendamm 54/55
10707 Berlin (DE)**

(56) Entgegenhaltungen:
WO-A1-96/24831      DE-A1- 4 116 280
JP-A- 2003 057 087   JP-A- 2005 274 515
JP-A- H08 122 251    US-A- 5 468 962

• K. KERÄNEN ET AL: "Differential photo-acoustic gas cell based on LTCC for ppm gas sensing", PROCEEDINGS OF SPIE, vol. 7607, 3 February 2010 (2010-02-03), pages 1 - 4, XP055126299, ISSN: 0277-786X, DOI: 10.1117/12.841363
• PAUL M. PELLEGRINO: "Miniature photoacoustic chemical sensor using microelectromechanical structures", PROCEEDINGS OF SPIE, vol. 5416, 1 January 2004 (2004-01-01), pages 42 - 53, XP055017097, ISSN: 0277-786X, DOI: 10.1117/12.543934

**Beschreibung**

Die Erfindung betrifft in einem ersten Aspekt einen photoakustischen Gassensor mit einer mit Gas befüllbaren Detektionskammer und einer Referenzkammer die lateral nebeneinander angeordnet sind und durch einen Sensorkanal verbunden werden. Ein Sensor, welcher an oder in dem Sensorkanal vorliegt, erlaubt eine Messung der photoakustischen Signale. Beide Kammern liegen in einer Ebene senkrecht zur emittierten IR-Strahlung des ebenso umfassten IR-Emitters. Der Gassensor ist außerdem aus einem mehrlagigen Substrat gebildet.

In weiteren Aspekten betrifft die Erfindung ein Herstellungsverfahren für einen Gassensor und ein Verfahren zur Analyse von Gas mit einem Gassensor.

Hintergrund und Stand der Technik

Die photoakustische Spektroskopie (PAS) erlaubt die Detektion feinster Konzentrationen von Gasen und hat eine Vielzahl von Anwendungen. Beispielhaft ist die Detektion von $CO_2$, welche in der Forschung und der Klimatechnik eine Rolle spielt. Auch die Konzentration z. B. von Abgasen in der Luft kann so gemessen werden. Ebenso sind militärische Anwendungen relevant, bei denen kleinste Konzentrationen von Giftgas detektiert werden können.

Bei der photoakustischen Spektroskopie wird intensitätsmodulierte Infrarotstrahlung mit Frequenzen im Absorptionsspektrum eines in einem Gas zu detektierenden Moleküls eingesetzt. Ist dieses Molekül im Strahlengang vorhanden, findet eine modulierte Absorption statt, die zu Erwärmungs- und Abkühlungsprozessen führt, deren Zeitskalen die Modulationsfrequenz der Strahlung widerspiegeln. Die Erwärmungs- und Abkühlungsprozesse führen zu Expansionen und Kontraktion des Gases, wodurch Schallwellen mit der Modulationsfrequenz verursacht werden. Diese lassen dann sich durch Schalldetektoren, wie beispielsweise Mikrofone, oder Flusssensoren messen.

Photoakustische Gassensoren bestehen aus den Komponenten Emitter, Detektor und Zelle. Es können auch mehrere Zellen vorhanden sein. Die Zelle wird meistens aus Stahl mesoskopisch als Zylinder ausgeführt, siehe z. B. [1] sowie US 2018 005 9066 A1.Dies verhindert eine weitere Miniaturisierung.

Aus dem Stand der Technik sind auch Bestrebungen für eine Miniaturisierung bekannt.

Beispielswiese wird in der DE 20 2015 002 315 ein vertikal integriertes MEMS System vorgeschlagen, welche zwei oder mehr Zellen vertikal übereinander in Strahlungsrichtung eines IR-Emitters aufweist. Eine derartige vertikale Anordnung hat jedoch unterschiedliche Nachteile So kann es zu einer Beeinflussung des Detektors und der zweiten Zelle durch die IR-Bestrahlung kommen, weil diese ebenfalls in Strahlungsrichtung angeordnet sind. Dies betrifft insbesondere die IR Strahlung, die nicht im Medium der ersten Zelle absorbiert werden kann und somit in die zweite Zelle (idR die Referenzkammer) eindringt und dort ein unerwünschtes Signal produziert. Auch der Detektor/Sensor selber kann Wärme der Strahlung aufnehmen und dadurch verfälscht werden.

Der Artikel: K. KERÄNEN ET AL: "Differential photo-acoustic gas cell based on LTCC for ppm gas sensing",PROCEEDINGS OF SPIE, Bd. 7607, 3. Februar 2010, Seiten 1-4, offenbart einen Detektor basierend auf photoakustischer Spektroskopie, welcher in zwei miteinander durch einen schmalen Kanal verbundene Zellen aufgeteilt ist, die jeweils in Strahlungsrichtung nach den Gaszellen und senkrecht zur Strahlungsrichtung nebeneinander angeordnet sind. In dem Verbindungskanal befindet sich ein optisch auslesbarer Cantilever zur Detektion von Druckvariationen des im Detektor enthaltenen Gases zwischen beiden Kammern. Der Detektor wird durch die "Low-Temperature Co-fired Ceramic"(LTCC)-Technologie hergestellt.

Die Patentanmeldung WO96/24831 A1 offenbart einen photoakustischen Sensor, wobei eine Kammer für ein zu detektierendes Gas durch Zusammenfügen zweier Silizium- oder Quarzelemente gebildet wird. Die Kammer wird mit modulierter IR-Strahlung beleuchtet und ist über eine Passage mit einem Raum verbunden, welcher auf zwei gegenüberliegenden Seiten durch Membrane begrenzt wird, deren Schwingungen z.B. kapazitiv ausgelesen werden können. Die Kammer und der Raum liegen in einer lateralen Anordnung vor. Zudem werden die Kammer und der Raum durch das Zusammenfügen von Silizium- oder Quarzelemente mit entsprechenden oberen und untere Kavitäten gebildet.

Aufgabe der Erfindung

Aufgabe der Erfindung ist es, einen Gassensor in Form eines photoakustischen Spektroskops sowie ein Verfahren zur Gasmessung sowie ein Herstellungsverfahren für Gassensoren ohne die Nachteile des Standes der Technik bereitzustellen. Insbesondere war es eine Aufgabe der Erfindung, einer verbesserten Gassensor basierend auf einem photoakustischen Spektroskop zur Verfügung zu stellen, welcher kompakt, robust und mit hoher Sensibilität und Genauigkeit eine Gaskonzentration messen kann und sich gleichzeitig durch einen einfaches, kostengünstiges, massentaugliches Herstellungsverfahren auszeichnet, bei dem alle Komponenten in nur wenigen Schritten und direkt integriert gefertigt werden können.

Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

In einem ersten Aspekt betrifft die Erfindung einen photoakustischen Gassensor, umfassend

- einen modulierbaren Infrarot-Emitter,

- eine mit Gas befüllbare Detektionskammer,

- eine Referenzkammer,

- ein Sensorkanal, welcher die Detektionskammer mit der Referenzkammer verbindet sowie

- einen Sensor, welcher sich im oder in der Nähe des Sensorkanals befindet,

wobei die Detektionskammer im Strahlengang des Infrarot-Emitters vorliegt, sodass der Infrarot-Emitter mittels modulierbar emittierbarer Infrarotstrahlung Gas in der Detektionskammer zur Ausbildung von Schalldruckwellen anregen kann, welche mit Hilfe des Sensors im Sensorkanal detektierbar sind, wobei die Detektionskammer, der Sensorkanal, die Referenzkammer sowie der Sensor in einer lateralen Ebene angeordnet vorliegen, welche im Wesentlichen senkrecht zur Strahlungsrichtung des IR-Emitters verläuft. Der Sensor kann auch bevorzugt als Sensorelement bezeichnet werden. Der Sensor bzw. das Sensorelement ist dafür eingerichtet eir Ausgleich des Schalldrucks durch den Sensorkanal von der Detektorkammer in die Referenzkammer zu detektieren. Eine Detektion von Schalldruckwellen im Sensorkanal mittels des Sensors bzw. Sensorelementes erfolgt bei der Erfindung.

Erfindungsgemäß liegen die Detektionskammer, der Sensorkanal, die Referenzkammer sowie der Sensor in einem mehrlagigen Substrat.

Bei diesem Gassensor sind Detektionskammer und Referenzkammer in einer Ebene nebeneinander und senkrecht zur Strahlungsrichtung des IR-Emitters angeordnet und in einem mehrlagigen Substrat, das auch senkrecht zur Strahlungsrichtung des IR-Emitters angeordnet ist, gebildet. Durch diese Anordnung und die Verwendung eines Sensors im zwischen den Kammern liegenden Sensorkanal kann eine einfache Herstellungsweise und kompakte Bauform mit niedriger Bauhöhe erreicht werden.

Dadurch, dass Detektionskammer und Referenzkammer lateral nebeneinander angeordnet sind und die Strahlung des IR-Emitters im Wesentlichen senkrecht zu dieser Anordnungsebene ausgerichtet ist, kann bei gleichzeitiger Fokussierung des Strahls auf die Detektionskammer insbesondere erreicht werden, dass nur die Detektionskammer und nicht die Referenzkammer bestrahlt wird. Findet daraufhin in der Detektionskammer aufgrund eines vorhandenen Gasbestandteils eine modulierte Absorption statt, wird über den Sensorkanal ein Druckausgleich zur bevorzugt nicht bestrahlten Referenzkammer hergestellt, der durch den Sensor im Sensorkanal vermessen werden kann. Hierdurch können Störeinflüsse vermieden und die Sensibilität erhöht werden.

Durch den kompakten Aufbau in einem mehrlagigen Substrat mit einem Sensor kann eine integrierte Bauweise umfassend die wesentlichen Komponenten des Gassensors erreicht werden. Dieser kann dabei auch stark miniaturisiert sein. Die Verwirklichung in einem mehrlagigen Substrat vereinfacht das Herstellungsverfahren. Vorteilhafterweise können hierbei standardisierte Herstellungsverfahren der Halbleiter und/oder MEMS-Herstellung herangezogen werden. Durch den Sensor können die Abmessungen insbesondere des Sensorkanals unabhängig von der Größe der übrigen Komponenten des Gassensors gewählt und auf bestimmte Anforderungen, z. B. eine gewünschte Sensitivität des Sensors bezüglich der Druckänderungen in der Detektionskammer angepasst werden.

Ein photoakustisches Gassensor ist dem Fachmann dabei in seinen Grundzügen bzw. wesentlichen Komponenten bekannt. Ein modulierbarer Emitter erzeugt elektromagnetischer Strahlung im infraroten Wellenlängenbereich und ist dabei bevorzugt so angeordnet und konfiguriert, dass die von dem Infrarot-Emitter emittierte Infrarotstrahlung im Wesentlichen oder zumindest teilweise auf das Gas in der Detektionskammer trifft.

Erfolgt die modulierte Bestrahlung mit einer Infrarotwellenlänge, welche dem Absorptionsspektrum eines in dem Gasgemisch befindlichen Moleküls einer Gaskomponente entspricht, findet eine modulierte Absorption statt, die zu Erwärmungs- und Abkühlungsprozessen führt, deren Zeitskalen die Modulationsfrequenz der Strahlung widerspiegeln. Gemäß dem photoakustischen Effekt führen die Erwärmungs- und Abkühlungsprozesse zu Expansionen und Kontraktion der Gaskomponente wodurch diese zur Ausbildung von Schalldruckwellen mit im Wesentlichen der Modulationsfrequenz angeregt wird. Die Schalldruckwellen werden auch als PAS-Signale bezeichnet und lassen sich mittels eines Sensors, beispielsweise eines Schalldetektors oder Durchflusssensor messen. Die Leistung der Schallwellen ist dabei vorzugsweise direkt proportional zur Konzentration der absorbierenden Gaskomponente.

Unter dem Begriff Gaskomponente wird bevorzugt der Anteil chemisch (und spektroskopisch) gleicher Gasmoleküle (z.B. $CO_2$, Methan, Stickstoff etc.) in einem Gasgemisch verstanden, während das Gasgemisch die Gesamtheit bzw. das Gemisch aus mehrerer (bevorzugt unterschiedlichen) Gaskomponenten meint (z.B. Erdgas, Luft, etc.).

Verschiedene Infrarot (IR) Emitter kommen bevorzugt als Strahlungsquelle für die genannten Anwendungen in Frage. Es können beispielsweise schmalbandige Laserquellen im Infrarotbereich verwendet werden. Diese erlauben vorteilhafterweise die Verwendung hoher Strahlungsintensitäten und können mit Standardkomponenten für die photoakustische Spektroskopie vorzugsweise hochfrequent moduliert werden. Jedoch sind durch das schmale Spektrum des Lasers nur jene Moleküle detektierbar, welche ein entsprechendes Absorptionsspektrum aufweisen. Daher werden bevorzugt mehrere Laser verwendet, falls verschiedene Moleküle detektiert werden sollen.

Der IR-Emitter ist vorzugsweise in einer linearen Anordnung zur Detektionskammer angeordnet. Das bedeutet bevorzugt, dass der IR-Emitter von einem Punkt auf der Verbindungslinie zwischen Detektionskammer und Referenzkammer in einem rechten Winkel zur Verbindungslinie angeordnet ist. Der IR-Emitter kann bevorzugt direkt an die Detektionskammer und/oder die Referenzkammer angrenzen und diese bestrahlen. Es kann jedoch auch bevorzugt sein, dass zwischen IR-Emitter und Detektionskammer und/oder Referenzkammer ein freier Bereich angeordnet ist, in dem der IR-Strahl eine Freistrahlstrecke durchquert.

Bevorzugt können ebenso thermische, breitbandige Emitter verwendet werden. Diese weisen vorteilhafterweise ein breites Spektrum auf, welches sich z. B. durch den Einsatz von (durchstimmbaren) Filtern weiter selektieren lässt. Aufgrund thermischer Zeitkonstanten liegt die Modulationsfrequenz bei einer direkten Modulation vorzugsweise im Bereich von einigen Hz bis ca. 100 Hz.

Ein modulierbarer Infrarot-Emitter bezeichnet bevorzugt eine Vorrichtung, die elektromagnetische Strahlung in einem Wellenlängenbereich im Infrarot (IR) Bereich aussendet, insbesondere zwischen ca. 700 Nanometer (nm) und 1 Millimeter (mm) Wellenlänge. Die dementsprechende Frequenz der emittierten Strahlung kann im Bereich zwischen etwa 300 Gigahertz (GHz) bis 400 Terrahertz (THz) liegen. Das Spektrum kann ebenso bevorzugt anhand der Wellenzahl $m^{-1}$ bzw. $cm^{-1}$ wiedergegeben werden, wie es im Bereich der Spektroskopie üblich ist. Ein Fachmann weiß, wie die Umrechnung zwischen diesen Einheiten vorgenommen wird.

Das Spektrum ist insbesondere so gewählt, dass es dem bevorzugten Anwendungsgebiet des Emitters, nämlich der Infrarotspektroskopie und insbesondere der photoakustischen Spektroskopie entspricht. Dabei ist insbesondere die Schwingungsanregung der zu spektroskopierenden und/oder zu detektierenden Gasmoleküle bevorzugt, welche je nach Gasmolekülen einem bevorzugten spektralen Bereich entsprechen. Beispielsweise ist für die Anregung von $CO_2$ Molekülen ein Spektralbereich von etwa 4,2 Mikrometern ($\mu$m) geeignet. Besonders bevorzugte Wellenlängenbereich der Infrarotstrahlung sind 700 nm bis 10 $\mu$m, bevorzugt 1 bis 10 $\mu$m, besonders bevorzugt 2 $\mu$m bis 10 $\mu$m.

Zur Erzeugung der Infrarotstrahlung ist bevorzugt eine Bereitstellung thermischer Energie in Form eines Heizelements vorgesehen. Besonders bevorzugt ist ein (Mikro-) Heizelement. Unter einem Mikro-Heizelement wird bevorzugt ein Heizelement mit Abmessungen der Größenordnung Mikrometer ($\mu$m) verstanden. Dabei umfasst das Heizelement eine erhitzbare Schicht aus einem leitfähigen Material, welches bei Durchfluss eines elektrischen Stroms joulesche Wärme produziert.

Die produzierte Wärme zeigt bevorzugt eine Abhängigkeit vom ohmschen Widerstand des Elements und vom Quadrat der Stromstärke bzw. vom Quadrat der angelegten Spannung und dem inversen ohmschen Widerstand, je nachdem, ob eine Strom- oder eine Spannungsquelle verwendet wird. Eine thermische Quelle infraroter Strahlung hat für die PAS vorteilhafte Eigenschaften, wie z. B. eine breitbandige Emission, durch die eine Vielzahl verschiedenster Gasatome bzw. -moleküle mit nur einer Lichtquelle angeregt werden können. Gleichzeitig ist ein thermischer IR-Emitter besonders kostengünstig, einfach herzustellen und langlebig.

In einem Gleichgewichtszustand ist die produzierte Wärme gleich zu den Wärmeverlusten durch Wärmeleitung, Konvektion und Wärmestrahlung (synonym: thermische Strahlung, Infrarotstrahlung), welche an den äußeren Grenzflächen der stromdurchflossenen erhitzbaren Schicht abgegeben wird. Wie dem Fachmann bekannt ist, verursacht die produzierte Wärme unter anderem thermische Strahlung, insbesondere durch thermische Bewegung von Teilchen, welche z. B. eine Beschleunigung von Ladungsträgern und/oder oszillierende Dipolmomente zur Folge hat. Somit kann durch eine stromdurchflossene erhitzbare Schicht gezielt Infrarotstrahlung erzeugt werden. Die erhitzbare Schicht ist bevorzugt aus Metall, beispielsweise aus Wolfram, Molybdän oder aus Platin. Durch Anlegen einer geeigneten Spannung und den daraus resultierenden Stromfluss wird joulesche Wärme und somit letztendlich Infrarotstrahlung erzeugt.

Das Strahlungsspektrum eines erhitzen Körpers lässt sich dabei bevorzugt angenähert durch das Planck'sche Strahlungsgesetz beschreiben, wobei dem Fachmann die Unterschiede einer realen erhitzbaren Schicht zu einem schwarzen Körper bekannt sind, beispielsweise der Emissionsgrad oder die reale Abweichung von einem thermischen Gleichgewicht des Körpers. Trotz dieser Abweichungen werden das erzeugte Spektrum und dessen Intensität im Wesentlichen von der Temperatur und der abstrahlenden Fläche gemäß dem Planck'schen Strahlungsgesetz beschrieben.

Somit kann ein Fachmann durch gezieltes Design des (Mikro-) Heizelements ein bevorzugtes Spektrum mit einer bevorzugten Intensitätsverteilung erzielen. Hierzu sind neben dem Material und der geometrischen Ausgestaltung des Heizelements bevorzugt die zur Verfügung gestellte elektrische Energie, sowie die Größe der Wärmeverluste des Heizelements neben der Wärmestrahlung maßgeblich. Die Größe dieser Wärmeverluste wird beispielsweise bestimmt durch die Wärmeleitfähigkeit zwischen dem Heizelement und den angrenzenden Materialien und/oder Fluiden sowie deren Wärmekapazität und der Größe der Grenzfläche(n).

Ein IR- Emitter in Form eines Heizelements ist besonders kostengünstig und robust, gleichzeitig lässt sich aufgrund der spektralen Breite der Emission eine Vielzahl von Gasmolekülen bei der PAS detektieren. Durch einen vorzugsweise durchstimmbaren Bandpass-Filter lassen sich bevorzugt bei Bedarf schmalere Spektren aus dem breiten Emissionsspektrum selektieren.

Die Infrarotstrahlung kann vorzugsweise ebenso durch eine im gewünschten infraroten Spektralbereich emittierende Leuchtdiode (LED) und/oder einen Laser erzeugt werden. Insbesondere ein Laser weist vorzugsweise ein schmales Emissionsspektrum auf, so dass bevorzugt nur genau auf dieses Spektrum passende Absorptionslinien von Gasatomen bzw. - molekülen angeregt und somit detektiert werden können. Daher ist ein Laser vorteilhaft, wenn nur bestimmte Gasmoleküle detektiert werden sollen, wobei die Aussagekraft der Detektion bezüglich des Vorhandenseins dieser Moleküle besonders hoch ist, da andere Moleküle durch das schmale Spektrum des Lasers nicht angeregt werden können.

Die Emission des IR-Emitters erfolgt bevorzugt als Strahl, welcher in einer bevorzugten Richtung in Form einer Grade orientiert ist. Der Begriff Strahl soll im weiteren Verlauf den vorzugsweise gebündelten Teil der Strahlung entlang der bevorzugten Strahlrichtung des Emitters beschreiben, welcher vom Emitter ausgesandt wird, wobei insbesondere die Bereiche der größten Intensität entlang dieser Richtung den Strahl definieren. Intensität ist bevorzugt definiert als Flächenleistungsdichte und hat bevorzugt die Einheit Watt pro Quadratmeter oder abgekürzt W/m$^2$.

Es können zusätzliche Komponenten wie z. B. Linsen im Emitter integriert oder extern angebracht sein, die für eine Bündelung bzw. Kollimation des Strahls sorgen. Ein Fachmann weiß, wie er durch das Design des IR-Emitters sowie durch Verwendung weiterer Komponenten das Emissionsprofil der Strahlungsquelle so formt, dass ein gewünschtes Strahlprofil sowie eine gewünschte Strahlrichtung resultieren. Dabei kann der modulierbare IR-Emitter bevorzugt ohne zusätzliche Linsen auskommen, oder als ein System umfassend Strahlungsquelle und mindestens einer Linse zur Kollimation des Strahls vorliegen.

Der Emitter ist modulierbar, das bedeutet, dass die Intensität der emittierten Strahlung, bevorzugt die Intensität des Strahls im zeitlichen Verlauf kontrollierbar geändert werden kann. Die Modulation soll bevorzugt eine zeitliche Änderung der Intensität als messbare Größe hervorrufen. Das bedeutet z. B., dass die Intensität im zeitlichen Verlauf zwischen der innerhalb des Messzeitraums gemessenen schwächsten Intensität und der innerhalb desselben Zeitraums gemessenen stärksten Intensität ein Unterschied besteht, der größer ist als die Sensibilität eines für das Strahlungsspektrum und die Anwendung typischerweise verwendeten Geräts zur Messung oder Bestimmung der Intensität. Bevorzugt ist der Unterschied deutlich größer als ein Faktor 2, mehr bevorzugt 4, 6 oder 8 zwischen der stärksten und der schwächsten einstellbaren Intensität. Besonders bevorzugt erfolgt die Modulation der Intensität des modulierten Strahles für eine oder mehrere vorbestimmte Resonanzwellenlängen.

Vorzugsweise kann eine direkte Modulation durch Variation der Stromzufuhr vorgenommen werden. Bei einem thermischen Emitter ist eine solche Modulation aufgrund thermischer Zeitkonstanten meistens auf einen bestimmten Bereich eines Modulationsspektrums limitiert, z. B. im Bereich einer Größenordnung von bis zu 100 Hz. Bei z. B. einem Laser oder einer LED sind bevorzugt deutlich höhere Modulationsraten, z. B. im kHZ-Bereich und darüber hinaus, möglich. Eine Modulation des Infrarot-Emitters kann vorzugsweise ebenso durch eine externe Modulation erfolgen, z. B. durch die Verwendung eines sich drehend Chopperrads und/oder eines Elektrooptischen Modulators.

Der IR-Emitter kann insbesondere ein in den Aufbau des Gassensors (bevorzugt monolithisch) integrierter MEMS-Emitter sein.

Die Detektionskammer ist mit Gas befüllbar. Dabei ist die Detektionskammer vorzugsweise ein Hohlraum im Gassensor. Das kann bevorzugt bedeuten, dass auch bei einem zumindest teilweise abgeschlossenen bzw. verschließbaren Volumen eine vorzugsweise verschließbare Öffnung zur Befüllung vorliegt. Je nach Messmethode der PAS kann dabei die Öffnung bevorzugt wiederverschließbar gestaltet werden, wodurch das Gas austauschbar sein kann. Es kann jedoch ebenso bevorzugt sein, die Kammer einmalig, z. B. während der Herstellung, mit Gas zu befüllen und danach nicht mehr auszutauschen bzw. nachzufüllen. Vorzugsweise kann auch ein Gasfluss realisiert werden, indem die Detektionskammer z. B. mindestens eine erste Öffnung umfasst.

Es kann bevorzugt über bspw. eine erste Öffnung als Zulauf und eine zweite Öffnung als Ablauf entweder ein kontinuierlicher Gasfluss in die Kammer realisiert werden oder ein diskontinuierlicher Gasfluss, bei dem z. B. während einer Befüllungs- bzw. Gasaustauschphase eine Befüllung bzw. ein Austausch des Gases in der Detektionskammer vorgenommen werden kann. In einer Messphase kann bspw. der Gasfluss unterbrochen werden. Es können vorzugsweise zu verschiedenen Zeitpunkten verschiedene Gase analysiert werden, wobei bevorzugt zwischen zwei zu analysierenden Gasen kann ein Reinigungsgas zur Reinigung des Volumens von etwaigen Gasrückständen zugeführt werden.

Die Detektionskammer wird vorzugsweise auch als Detektorkammer bezeichnet.

Ist die Detektionskammer gegenüber der Umgebung zumindest teilweise geöffnet, z. B. durch eine wunschgemäß dimensionierte Öffnung, kann vorteilhafterweise ein permanenter Gasaustausch mit einer Umgebung stattfinden, wobei eine Befüllung der Detektionskammer durch Wechselwirkung mit einer Gasatmosphäre der Umgebung stattfindet.

Die Höhe der Detektionskammer entspricht bevorzugt der maximalen Ausdehnung der Detektionskammer in Richtung der IR-Strahlungsrichtung. Vorzugsweise entspricht hingegen die Breite Detektionskammer der maximalen Ausdehnung in Richtung einer zur Strahlungsrichtung senkrechten lateralen Ebene, in der Detektionskammer und Referenzkammer nebeneinander angeordnet vorliegen.

Vorzugsweise ist ebenso eine Tiefe definiert, welche bevorzugt senkrecht zur Höhe und zur Breite verläuft. Die Tiefe wird vorzugsweise ebenso als Länge bezeichnet.

Die Dimensionierung der Detektionskammer insbesondere in Bezug auf diese drei Raumrichtungen und die Formgebung allgemein wird vorteilhafterweise je nach Anwendungsgebiet und/oder Anforderungen an den Gassensor bzgl. Abmessungen, Sensitivität und/oder anderer die Leistung beschreibender Parameter angepasst. Dabei kann eine Anpassung an die Strahldimensionierung des Emitters erfolgen oder die Dimensionierung so gewählt werden, dass akustischen Resonanzen gefördert werden. Die Detektionskammer kann vorzugsweise einen im Wesentlichen quaderförmigen Umriss aufweisen.

Es ist ebenso eine Referenzkammer umfasst, welche vorzugsweise von den Abmessungen und der geometrischen Gestaltung ähnlich zu der Detektionskammer gestaltet sein kann und deren Ausdehnungen analog zur Detektionskammer mit Höhe, Breite und/oder Tiefe/Länge bezeichnet werden.

Die Verwendung einer Referenzkammer gemeinsam mit einer Detektionskammer ist eine bevorzugter Messaufbau für die Gasanalyse durch photoakustische Spektroskopie. Dabei kann in der Referenzkammer vorzugsweise das gleiche Gas vorliegen wie in der Detektionskammer oder aber ein Referenzgas mit bekannten Eigenschaften. Im ersten Fall soll vorzugsweise im Wesentlichen nur die Detektionskammer mit IR-Strahlung bestrahlt werden, so dass durch Absorption dieser Strahlung entstehende Schalldruckwellen vorzugsweise im Wesentlichen dort entstehen und so durch einen bevorzugt zwischen beiden Kammern angeordneten Detektor bzw. Sensor vermessen werden kann. Lokale Druckschwankungen aufgrund externer Einflüsse, wie z. B. extern erzeugte Schalldruckwellen, betreffen hierbei vorzugsweise beide Kammern und werden vorteilhafterweise nicht gemessen, da der Sensor insbesondere im Wesentlichen Druckunterschiede zwischen beiden Kammern misst.

Ebenso kann im zweiten Fall, in der in der Referenzkammer ein Referenzgas vorliegt, bevorzugt sein, dass beide Kammern mit der modulierten IR-Strahlung bestrahlt werden, wobei vorzugsweise aufgrund eines unterschiedlichen Absorptionsverhaltens der Detektionskammer auf die dortige Zusammensetzung, insbesondere auf eine vom Referenzgas sich unterscheidende Zusammensetzung und/oder Konzentration geschlossen werden kann. Dabei kann insbesondere bevorzugt sein, dass die Referenzkammer ein Vakuum aufweist. Der Fachmann weiß, dass ein Vakuum in der Realität nie absolut ist, sondern sich durch einen gegenüber dem Atmosphärendruck bei Normalbedingungen erheblich geringeren Druck auszeichnet. Vorzugsweise ist die Referenzkammer mit Gas befüllbar, wobei die entweder über eine eigene, vorzugsweise verschließbare Öffnung vorgenommen werden kann. Auch eine Befüllung bei der Herstellung ist denkbar. Es kann ebenso bevorzugt sein, dass die Referenzkammer keine eigene Öffnung aufweist, sondern durch den Sensorkanal mit einem Gas aus der Detektionskammer befüllt wird.

Zwischen Detektionskammer und Referenzkammer liegt der Sensorkanal vor, welcher die Detektionskammer mit der Referenzkammer verbindet. Dieser weist bevorzugt einen gegenüber den Abmessungen der beiden Kammer erheblich verringerten Querschnitt aus. In diesem Sensorkanal ist insbesondere der Sensor angeordnet, durch welchen Schalldruckwellen bzw. einen Ausgleich eines Schalldruckes zwischen den Kammern erfindungsgemäß innerhalb des Sensorkanals detektiert werden können.

Der Sensor ist dabei entsprechend angeordnet, um die Schalldruckwellen, welche aus der Detektionskammer und/oder der Referenzkammer den Sensorkanal erreichen, zu detektieren. Der Sensorkanal kann insbesondere in Form eines Verbindungsrohres bzw. Verbindungsröhrchens zwischen den Kammern ausgestaltet sein, in welchen der Sensor eingebracht werden kann. Es kann aber auch bevorzugt sein, dass der Sensorkanal durch eine Apertur bzw. Öffnung in einer Trennwand zwischen einer Detektionskammer und Referenzkammer geformt wird, wobei der Sensor bzw. das Sensorelement bevorzugt mindestens teilweise auf der Trennwand installiert vorliegt zur Messung eines Gasfluss durch die Apertur eingerichtet ist

Im Falle der Integration eines Sensors in den Sensorkanal kann der Sensor vorzugsweise die ganze Querschnittsfläche des Sensorkanals im Wesentlichen oder teilweise umfassen. Dabei kann der Sensor vorzugsweise eine insbesondere Apertur genannte Öffnung aufweisen. Der Sensor kann den Kanal bevorzugt abschließen oder aber eine vom Sensor nicht umfasste Öffnung im Kanal zwischen beiden Kammern ermöglichen. Er kann bevorzugt im Wesentlichen oder teilweise materialdicht für das sich in den Kammern befindliche Gas oder im Wesentlichen oder teilweise durchlässig sein. Bei einer Durchlässigkeit ist insbesondere bevorzugt, dass diese so ausgestaltet ist, dass ein Druckausgleich zwischen beiden Kammern stattfinden kann, dieser jedoch gegenüber den zu detektierenden Schalldruckwellen ausreichend verzögert wird, um die Schalldruckwellen effektiv detektieren zu können. Ein Fachmann weiß, wie er abhängig von der Anordnung, der Dimensionierung der Kammern und/oder des Kanals, dem verwendeten Sensor, dem zu detektierenden Gas und/oder weiteren Einflussgrößen eine Öffnung anordnen, ausgestalten und/oder dimensionieren muss, um vorgenanntes Ziel zu erreichen.

Vorzugsweise weist der Gassensor eine dem IR-Emitter zugewandte, einheitliche Oberfläche auf, die sich über die gesamte laterale Anordnung umfassend die Detektionskammer, den Sensorkanal und die Referenzkammer. Dabei ist vorzugsweise der Sensorkanal gegenüber den die Kammern umfassenden Innenvolumina etwas gegenüber dem IR-Emitter zurückgesetzt, um eine unerwünschte direkte IR-Einstrahlung auf den im Sensorkanal angeordneten Sensor zu minimieren.

Erfindungsgemäß liegt die Detektionskammer im Strahlengang des Infrarot-Emitters vor. Das bedeutet bevorzugt, dass die Intensität des Strahls im Wesentlichen oder zumindest teilweise auf die dem Emitter zugewandte Seite der Detektionskammer trifft. Teilweise bedeutet bevorzugt zu mindestens 40 %, bevorzugt mindestens 50%, 60% oder mehr. Es bedeutet insbesondere, dass der Bereich des Maximums der Intensität des Strahls auf die Detektionskammer trifft. Bevorzugt bedeutet es, dass der Strahl so fokussiert und/oder kollimiert ist, dass ein wesentlicher Anteil der Intensität auf der dem Emitter zugewandten Seite auftrifft. Als bevorzugtes Beispiel sein ein Gauß-Strahl genannt, welcher insbesondere ein transversales Profil gemäß einer Gauß-Kurve aufweist. Entlang des Strahls ist dabei bevorzugt durch die Strecke mit der maximalen Intensität als z-Achse definiert. Der Strahlradius w auf der "Höhe" z des Strahls ist dabei bevorzugt definiert als der Abstand zur z-Achse, an dem die Intensität auf $1/e^2$ (bevorzugt ca. 13,5 %), gefallen ist. Dieser Definition folgend ist bevorzugt, dass "die Detektionskammer liegt im Strahlengang des Infrarot-Emitters vor" bedeutet, dass der im Wesentlichen der gesamte Strahlradius auf der dem Emitter zugewandten Seite der Detektionskammer auftrifft.

Erfindungsgemäß wird die Detektionskammer mit IR-Strahlung beleuchtet, so dass ein Fluss/Druck des enthaltenen Gases zeitlich moduliert zwischen den beiden Kammern entsteht. Bevorzugt ist die dem Emitter zugewandte Seite der Detektionskammer für die emittierte IR-Strahlung transparent, so dass die Strahlung im Wesentlichen den mit Gas befüllbaren Innenraum der Kammer erreicht. Die dem IR-Emitter zugewandte Seite insbesondere der Detektionskammer wird vorzugsweise auch als Einstrahlfläche bezeichnet.

Dass die Detektionskammer im Strahlengang des Infrarot-Emitters vorliegt, bedeutet, dass der Infrarot-Emitter mittels modulierbar emittierbarer Infrarotstrahlung Gas in der Detektionskammer zur Ausbildung von Schalldruckwellen anregen kann, da diese zumindest teilweise (bevorzugt zu mindestens 40 %, stärker bevorzugt zu mindestens 50 %, insbesondere zu mindestens 60 %) bestrahlt wird und insbesondere eine wesentlicher Teil Infrarotstrahlung das mit Gas befüllbare Volumen im Inneren der Detektionskammer erreicht. Ein wesentlicher Teil bedeutet insbesondere zu mindestens 80 %, stärker bevorzugt zu 90 % und insbesondere zu 95 %.

Die Schalldruckwellen sind erfindungsgemäß mit Hilfe des Sensors im Sensorkanal detektierbar. Das bedeutet, dass der MEMS-Sensor von seiner Anordnung und seiner Realisierung geeignet ist, die Schalldruckwellen bzw. den Ausgleich eines Schalldruckes zwischen den Kammern zu detektieren. Der Sensor kann beispielsweise in Form eines Mikrofons in Form einer Membran ausgeführt sein, welche durch die Schalldruckwellen zu Schwingungen angeregt werden können, wobei die Schwingungen bevorzugt durch eine entsprechende elektrische, magnetische und/oder elektronische Anordnung und/oder Ansteuerung auslesbar sind.

Der Sensor bezeichnet bevorzugt einen Sensor in Form eines Mikrosystems (engl. *Micro-Electro-Mechanical System,* kurz MEMS) und kann daher in bevorzugten Ausführungsformen auch als MEMS-Sensor bezeichnet werden Ein Mikrosystem ist insbesondere ein miniaturisiertes Gerät, eine Baugruppe und/oder ein Bauteil, wobei die Komponenten Abmessungen der Größenordnung von etwa 1 Mikrometer ($\mu$m) oder kleiner haben und als System zusammenwirken. Der MEMS-Sensor ist z. B. ein MEMS-Mikrofon.

Insbesondere kann der gesamte photoakustische Gassensor als MEMS realisiert sein. Dabei kann vorteilhafterweise der Sensor direkt im MEMS realisiert bzw. integriert sein. In diesem Sinne bezeichnet ein MEMS-Sensor bevorzugt ein Sensor bzw. Sensorelement in dem in MEMS ausgeführten photoakustischen Gassensor.

Detektionskammer, Sensorkanal, Referenzkammer sowie MEMS-Sensor werden insbesondere in einem mehrlagigen Substrat gebildet. Substrat bezeichnet insbesondere das Grundmaterial für die Fertigung der jeweiligen Komponenten. Insbesondere orientiert sich der Begriff an der Halbleiterindustrie, bei dem aus dem Substrat Schaltungen gefertigt werden. Dabei kommen vorliegend aus der Halbleiterindustrie und/oder der MEMS-Fertigung bekannte Materialien und/oder Fertigungstechniken zum Einsatz, welche sich durch ihre Effizienz, Einfachheit, geringen Produktionskosten und Eignung zur Fertigung hoher Stückzahlen eignet.

Ein Substrat kann dabei durch Ätzprozesse und/oder physikalische Bearbeitungstechniken am Stück nach Wunsch bearbeitet und in der Form angepasst werden, insbesondere durch Abtragen und/oder Beseitigung von Bereichen und/oder Schichtdicken des einzelnen Substrats. Ein mehrlagiges Substrat umfasste mehrere, bevorzugt, 2, 3, 4, 5, 6, 7, 8, 9 oder 10 Lagen oder mehr einzelne dünne Substrate, welche einzeln bearbeitet und dann zum Gassensor, insbesondere umfassend die genannten Komponenten zusammengefügt werden kann.

Insbesondere durch die in einer lateralen Ebene nebeneinander angeordneten genannten Komponenten können die jeweiligen Schichten der Komponenten in der jeweiligen Substratlage sehr einfach und/oder im Wesentlichen gleichzeitig gefertigt werden. Es kann ein einfach herzustellender Gassensor mit geringer Bauhöhe und hoher Kompatibilität zu weiteren Halbleiterelemente wie z. B. elektronischen Schaltungen gefertigt werden. Es werden nur wenige Substratlagen verwendet. Hierdurch kann die Anzahl der verwendeten Komponenten vorteilhafterweise weiter reduziert werden. Es kann insbesondere durch ein geeignetes Zusammenfügen der Substratschichten eine monolithische Kammer mit integriertem Detektor realisiert werden. Monolithisch bedeutet bevorzugt, aus einem Stück bestehend, zusammenhängend und/oder fugenlos bzw. aus sehr kleinen Bauelementen untrennbar zusammengesetzt.

Durch die Kompaktheit und Kompatibilität des Gassensors ist ein besonders vielseitiges Anwendungsgebiet gegeben. Beispielsweise ist ein Einbau in ein Smartphone oder sonstigen vom Endverbraucher nutzbaren Geräten vorstellbar. Der Gassensor kann bspw. auch zur Emissionskontrolle eingesetzt und aufgrund seiner Abmessungen sehr gut nachgerüstet werden. Auch eine Nachrüstung in sensiblen Bereichen der Öffentlichkeit, wie z. B. Bahnhöfen, Flughäfen, Zügen etc. zur Gefahrenabwehr eines terroristischen Anschlags sind vorstellbar.

Bei der Erfindung liegen die Referenzkammer und der Sensorkanal mit dem Sensor nicht im Strahlengang des Infrarot-Emitters vor. Dies kann erfindungsgemäß dadurch erreicht werden, dass Detektionskammer, Sensorkanal und Referenzkammer lateral zueinander in einer zur Einstrahlungsrichtung senkrechten Ebene angeordnet sind. So kann durch geeignete Dimensionierung des Gassensors, insbesondere der Einstrahlfläche der Detektionskammer und/oder des auf die Detektionskammer gerichteten IR-Strahls erreicht werden. Hierdurch kann erreicht werden, dass durch Pas modulierte Schalldruckwellen im Wesentlichen nur in der Detektionskammer erzeugt werden. So kann die Messgenauigkeit und -empfindlichkeit verbessert werden. Außerdem können auch etwaige thermische Einflüsse, welche die Messgenauigkeit des Sensors stören, vorzugsweise minimiert werden.

In einer weiteren bevorzugten Ausführungsform der Erfindung umfasst das mehrlagige Substrat mindestens zwei Substratlagen ausgewählt aus der Gruppe bestehend aus monokristallinem Silizium, Polysilizium, Siliziumdioxid, Siliziumcarbid, Siliziumgermanium, Siliziumnitrid, Nitrid, Germanium, Kohlenstoff, Galliumarsenid, Galliumnitrid, Indiumphosphid und Glas.

Diese Materialien sind in der Halbleiter- und/oder Mikrosystemherstellung besonders einfach und kostengünstig zu bearbeiten und eignen sich ebenfalls gut für eine Massenherstellung. Ebenso sind diese Materialien für ein Dotieren und/oder Beschichten besonders geeignet, um in bestimmten Bereichen die gewünschten elektrischen, thermischen und/oder optischen Eigenschaften zu erzielen. Der Systemwafer kann z. B. möglichst niedrig dotiert sein zwecks hoher IR Transparenz. Insbesondere für die Herstellung eines Gassensors aus einem mehrlagigen Substrat, bevorzugt umfassend MEMS-Elemente, bieten die vorgenannten Materialien vielfältige Vorteile aufgrund der Verwendbarkeit standardisierter Herstellungstechniken, welche für die Integration weiterer Komponenten, wie z. B. elektronische Schaltungen ebenfalls besonders geeignet sind. Insbesondere die Verwendung von Glas in mindestens einer Substratlage ist gut geeignet für die Realisierung einer Einstrahlfläche der Detektionskammer und/oder der Referenzkammer.

Bei der Erfindung wird das mehrlagige Substrat durch Bonden mindestens zweier Wafer gebildet.

Das Bonden von Wafer beschreibt bevorzugt einen Verfahrensschritt in der Halbleiter- und Mikrosystemtechnik, bei dem zwei Wafer oder Scheiben, z. B aus Silizium, Quarz, Glas und/oder den vorgenannten Materialien miteinander verbunden werden.

Beim Bonden können vorzugsweise verschiedene Verfahren zum Einsatz kommen:

- Beim direkten Bonden, insbesondere von Silizium-Wafern, werden bevorzugt hydrophile und hydrophobe Oberflächen der Wafer unter hohen Temperaturen in Kontakt gebracht. Vorzugsweise wird dabei der eine Wafer mittig gegen den anderen gepresst, wobei vorteilhafterweise ein erster Kontaktpunkt entsteht. Diese mechanische Verbindung im Kontaktbereich beruht dabei vorzugsweise auf Wasserstoffbrücken und/oder Van-der-Waals-Wechselwirkungen. Der somit verbundene Kontaktbereich wird dabei vorzugsweise auf die übrige Waferfläche(n) ausgedehnt, indem anfangs vorhanden Abstandhalter zwischen diesen Flächen sukzessive entfernt werden. Dabei betragen die Prozesstemperaturen vorzugsweise zwischen 1000 °C und 1200 °C und es wird ein Druck auf die Wafer der Größenordnung 10 Megapascal (MPa) bis 25 MPa, insbesondere ungefähr 18 MPa, ausgeübt. Das Direkt-Bonden kann vorzugsweise für die Verbindung zweier Siliziumwafer und/oder Siliziumdioxidwafer verwendet werden.

- Beim anodischen Bonden findet insbesondere ein Glas mit erhöhter Na+-Ionenkonzentration (bevorzugt positiv geladenen Natriumionen) Verwendung, welches bevorzugt mit einem Siliziumwafer in Kontakt gebracht wird. Dabei wird eine elektrische Spannung angelegt, welche insbesondere konfiguriert ist, eine negative Polung am Glas zu erzeugen. Somit wird bevorzugt und insbesondere mithilfe einer erhöhten Prozesstemperatur erreicht, dass die Natriumionen (Na+) zur Elektrode diffundieren, wodurch sich bevorzugt eine Raumladungszone an der Grenzfläche ausbildet, welches eine Erhöhung des elektrischen Feldes bewirkt und Si-O-Si-Bindungen erzeugt. Diese Bindungen weiten sich bevorzugt sukzessive auf die gesamte Verbindungsfläche zwischen Glas und Silizium aus. Somit können insbesondere Glas und Siliziumwafer miteinander verbunden werden. Bei entsprechender Anpassung des Prozesses ist ebenso ein Bonden zweier Siliziumlagen und/oder einer Silizium-Metall Lage mit einem Glas möglich. Das anodische Bonden kann vorzugsweise bei Temperaturen von etwa 400 °C stattfinden, es kann ebenso bevorzugt bei "Niedrigtemperatur" bei etwa 180 °C stattfinden, wobei die zu bondenden Materialien vorzugsweise geschont werden. Bevorzugt können auch verschiedene der vorgenannten Materialien gebonded werden.

- Bevorzugt können auch Bond-Verfahren mit sogenannten Zwischenschichten zwischen den zu bondenden Wafern zum Einsatz kommen, wie bspw. das sogenannte Eutektische Bonden, welches vorzugsweise auch der einer Verbindung durch eine eutektische Legierung als Zwischenschicht, z. B. Si-Au (Silizium-Gold) oder Ge-Al (Germanium-Aluminium), basiert. Eine eutektische Legierung ist vorzugsweise eine Legierung, deren Bestandteile in einem solchen Verhältnis zueinander gemischt sind, dass bei einer bestimmten Temperatur die ganze Legierung flüssig bzw. fest wird. Eutektisches Bonden kann z. B. zum Verbinden zweier Siliziumwafer verwendet werden. Bevorzugt können jedoch auch andere der vorgenannten Materialien verbunden werden.

- Auch das Glas-Frit-Bonden beruht bevorzugt auf der Verwendung einer Zwischenschicht zwischen den zu verbindenden Wafern, wobei die Verbindungsbildung insbesondere durch Aufschmelzen von Glasloten/Glas-Fritten. Glaslot umfasst bevorzugt ein Glas, welches eine niedrige Erweichungstemperatur aufweist, bspw. ca. 400 °C. Glasfritte umfasst bevorzugt oberflächlich geschmolzenes Glaspulver, dessen Glaskörner bevorzugt zumindest teilweise zusammenbacken bzw. -sintern. Diese Art des Bondens kann bevorzugt Silizium- und/oder Siliziumdioxidwafer miteinander verbinden, bevorzugt jedoch auch andere vorgenannte Materialien.

- Das adhäsive Bonden beschreibt bevorzugt eine Verbindungsbildung durch eine Zwischenschicht umfassend Klebstoff. Durch adhäsives Bonden können vorzugsweise verschiedene der vorgenannten Materialien miteinander gebonded werden.

Bevorzugt kann durch Fotolithographie, Ätzen und/oder Lift-off-Verfahren ein selektives Bonden vorgenommen werden.

Durch Bonden mehrerer Lagen von einzeln vorbearbeiteten Substraten können vorteilhafterweise komplexe Komponenten von Gassensoren und insbesondere vollintegrierte, komplette Gassensoren einfach hergestellt werden.

Das Bonden von Strukturen aus vorbearbeiteten Substraten erlaubt die einfache Herstellung komplexer Strukturen, welche nur mit großem Aufwand aus einem einzelnen Wafer und/oder Substrat hergestellt werden könnten. Das Bonden mehrlagiger Substrate kann bspw. zur einfachen und effizienten Herstellung von Kavitäten bzw. Kammern des Gassensors verwendet werden, ohne dass diese aufwendig aus dem Inneren eines Rohmaterials herausgearbeitet werden müssen.

Die aus dem Bonden der Wafer resultierende Vorrichtung wird vorzugsweise auch als Wafer-Stack bezeichnet.

In einer weiteren bevorzugten Ausführungsform der Erfindung umfasst ein unterer Systemwafer den Sensor sowie mindestens zwei untere Kavitäten und ein oberer Deckelwafer weist zu den unteren Kavitäten komplementäre obere Kavitäten auf, sodass durch Bonden des unteren Systemwafers und des oberen Deckelwafers die Referenzkammer und Detektionskammer gebildet werden.

Die jeweiligen Kavitäten der beiden zu bondenden Wafer sind insbesondere halbseitig geschlossene Kavitäten, welche insbesondere auf der dem jeweils anderen Wafer zugewandten Seite geöffnet sind, so, dass durch Zusammenfügen im Wesentlichen ganzseitig geschlossene Kavitäten entstehen, wobei bevorzugt etwaige Öffnungen für einen Gasaustausch und/oder den Sensorkanal bestehen können. Die Kavität des jeweiligen Wafers umfasst insbesondere mindestens zwei Vertiefungen im Wafer auf der Seite des Wafers, welche mit dem anderen Wafer verbunden werden soll. Die Vertiefungen beider Wafer sind dabei jeweils so angeordnet, dass sie miteinander nach dem Zusammenfügen korrespondieren, wobei jeweils eine Vertiefung des einen und des anderen Wafers miteinander einen gemeinsamen Hohlraum innerhalb der Zusammengesetzten Struktur bilden.

Der Sensor ist bevorzugt zwischen den Kavitäten des unteren System-Wafers enthalten. Dieser kann bevorzugt in einem gemeinsamen Strukturierungsprozess mit der Ausbildung der Kavitäten geformt werden.

Bevorzugt werden durch die jeweils zwei Kavitäten pro Wafer nach dem Bonden beider Wafer die Detektionskammer und die Referenzkammer gebildet. Dabei ist bevorzugt zumindest in einem der Wafer zwischen beiden Kavitäten eine verbindende Kavität angeordnet, welche nach dem Zusammenfügen den Sensorkanal bildet. Besonders bevorzugt weisen beide Wafer zueinander korrespondierende Kavitäten auf, welche nach dem Zusammensetzen analog den Sensorkanal bilden. Diese mindestens eine Kavität hat bevorzugt bezüglich der geometrischen Abmessungen, insbesondere bezüglich der Tiefe der Vertiefung im Wafer, eine geringere Ausdehnung als die anderen beiden Kavitäten.

Bevorzugt ist der Sensor in der Kavität für den Sensorkanal oder zu diesem korrespondierend auf dem Systemwafer angebracht, sodass dieser nach dem Bonden im Sensorkanal vorliegt.

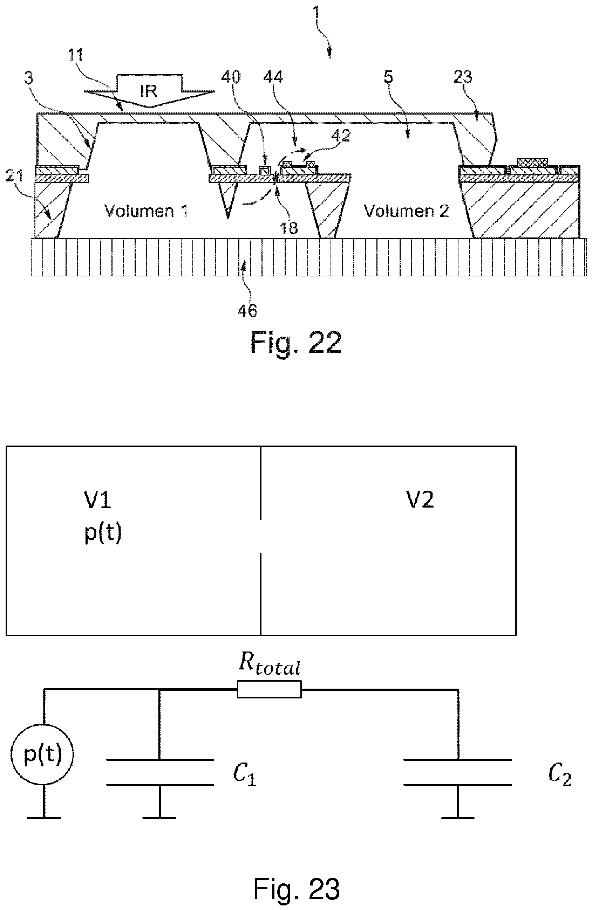

Es kann aber ebenso bevorzugt sein, dass im Strukturierungsprozess auf dem Systemwafer eine Trennwand bzw. Trennmembran gebildet wird, welche eine untere Kavität des Systemwafers von einer oberen Kavität des Deckelwafers trennt. Die Trennmembran kann bevorzugt eine oder mehrere Aperturen aufweisen, welche einen Gasfluss zwischen den nach dem Bonden erhaltenen Kammern erlaubt (vgl. Abb. 22). Die Komponenten des Sensors, beispielsweise ein Heizelement oder ein Temperatursensor werden bevorzugt auf der Trennmembran selbst aufgebracht sind, wie unten im Detail erläutert, bevorzugt für die Messung eines Gasflusses durch die Apertur eingerichtet.

Es können bevorzugt ebenso (z. B. lateral abgeleitete) Anschlusspads und/oder Leitungen für etwaige Elektronik zur Auslesung des Sensors umfasst sein. Ebenso kann optional ein durchstimmbarer IR Filter auf dem Systemwafer vorhanden sein.

Der Deckelwafer kann vorzugsweise auch aus Silizium, vorzugsweise transparent für eine IR-Strahlung, Glas oder auch einem Metall bestehen.

Der Deckelwafer kann bevorzugt ein "Printed Circuit Board" (PCB) und/oder eine (Träger-) Keramik, insbesondere umfassend Leiterbahnen aufweisen. So kann beispielsweise eine elektronische Verschaltung des Gassensors und insbesondere des Sensors bzw. der Sensor an sich besonders leicht und kostensparend realisiert werden.

Ein PCB bezeichnet bevorzugt eine Leiterplatte bzw. Platine oder gedruckte Schaltung. Diese ist bevorzugt ein Träger für elektronische Bauteile, insbesondere Surface Mounted Devices (SMDs) und/oder intergierte Schaltungen bzw. kann insbesondere selber Bestandteil einer integrierten Schaltung sein.

Ein PCB kann z. B. elektrisch isolierendes Material mit daran haftenden, leitenden Verbindungen (Leiterbahnen), insbesondere aus Kuper, umfassen. Als isolierendes Material kann bspw. faserverstärkter Kunststoff, Hartpapier, Teflon, Aluminiumoxid und/oder Keramik umfasst sein. Eine Trägerkeramik umfasst insbesondere ein keramisches Trägermaterial, welches durch Strukturierung und/oder Ausstattung mit weiteren Komponenten, wie z. B. Leiterbahnen bezüglich einer Funktionalität gestaltet wird. Eine Keramik bzw. ein keramisches Material umfasst insbesondere Silikat, Aluminiumoxid, Berylliumoxid, Zirconium(IV)-oxid, Titan(IV)-oxid, Siliciumcarbid, Bornitrid, Borcarbid, Siliciumnitrid, Aluminiumnitrid, Molybdändisilicid und/oder Wolframcarbid.

Auf diese Weise kann der Gassensor besonders einfach, weitestgehend integriert und unter Verwendung möglichst weniger und einfacher Prozessschritte hergestellt werden. Zunächst werden vorteilhafterweise Systemwafer und Deckelwafer einzeln gefertigt und müssen dann im Wesentlichen nur noch durch Bonden zum Gassensor zusammengefügt werden.

In einer weiteren bevorzugten Ausführungsform der Erfindung umfasst ein unterer Systemwafer den Sensor sowie mindestens zwei untere Kavitäten, wobei durch Bonden des unteren Systemwafers und eines oberen Deckelwafers die Referenzkammer und Detektionskammer gebildet werden.

In dieser bevorzugten Ausführungsform werden die Kammern insbesondere durch die Kavitäten des Systemwafers gebildet, welche durch das Bonden des Deckelwafers im Wesentlichen von oben geschlossen werden.

Diese Ausführungsform ist besonders einfach und billig in der Herstellung.

Bei der Erfindung umfasst ein unterer Systemwafer den Sensor sowie eine untere Kavität und ein oberer Deckelwafer weist zu der unteren Kavität zwei komplementäre obere Kavitäten auf, sodass durch Bonden des unteren Systemwafers und des oberen Deckelwafers die Referenzkammer, die Detektionskammer und der Sensorkanal gebildet werden.

In einer weiteren bevorzugten Ausführungsform der Erfindung weist die Detektorkammer und/oder die Referenzkammer eine Höhe von 10 μm bis 2 mm, bevorzugt von 50 μm bis 1 mm, besonders bevorzugt von 100 μm bis 500 μm auf.

So kann eine flache und kompakte Bauweise, insbesondere eine geringe Bauhöhe des Gassensors erreicht werden. Insbesondere ist aufgrund der lateral angeordneten Bauweise der Kammern die Bauhöhe nicht entscheidend für die Qualität und/oder Sensitivität der Messung. Bei in Strahlrichtung (übereinander) angeordneten Kammern ist es vorteilhaft, eine gewisse Mindestbauhöhe zu erzielen, um einen etwaig unerwünschten Einfluss der IR-Strahlung auf die Referenzkammer und/oder den Sensor zu minimieren. Dies ist bei der lateralen Bauweise vorteilhafterweise nicht erforderlich.

In einer weiteren bevorzugten Ausführungsform der Erfindung weist die Detektorkammer und/oder die Referenzkammer eine Länge oder Breite von 100 μm bis 5 mm, bevorzugt von 200 μm bis 3 mm, besonders bevorzugt von 500 μm bis 2mm auf.

So gleichzeitig eine kompakte Bauweise und ein ausreichendes Volumen gebildet werden, um detektierbare Schallwellen durch PAS anzuregen.

In einer weiteren bevorzugten Ausführungsform der Erfindung weist der Sensorkanal eine Länge von 1 μm bis 500 μm, bevorzugt von 10 μm bis 200 μm, besonders bevorzugt von 10 μm bis 100 μm auf.

In einer weiteren bevorzugten Ausführungsform der Erfindung weist der Sensorkanal einen Querschnitt von 1 $\mu m^2$ (beispielsweise $1\times1$ $\mu m^2$) bis 250 000 $\mu m^2$ (z.B. 500x500 $\mu m^2$), bevorzugt, von 100 $\mu m^2$ (beispielsweise 10x10 $\mu m^2$) bis 25 000 $\mu m^2$ (beispielsweise 50x50 $\mu m^2$) auf.

Somit kann der zwischen Detektionskammer und Referenzkammer angeordnete Sensorkanal eine ausreichende laterale Trennung der beiden Kammern bei gleichzeitig kompakter Bauweise erzielen. Gleichzeitig kann besonders einfach ein Sensor im Sensorkanal angeordnet werden.

In einer weiteren bevorzugten Ausführungsform der Erfindung ist der Sensor ein Schalldruckdetektor, wobei der Schalldruckdetektor bevorzugt einen piezoelektrischen, piezoresistiven und/oder magnetischen Balken und/oder ein kapazitives, piezoelektrischen, piezoresistives und/oder optisches Mikrofon umfasst.

Die Schalldruckwellen, welche durch die PAS erzeugt werden, können vorzugsweise auf verschiedene Arten detektiert werden. Dabei ist ein Schalldruckdetektor ein besonders gut geeignetes Mittel. Der Schalldruckdetektor kann insbesondere ein piezoelektrischer Balken sein.

Ein piezoelektrischer Balken ist vorzugsweise eine schwingfähige Struktur, insbesondere in Form eines Biegebalkens, welcher ein piezoelektrisches Material, z. B. in Form eines Aktuators umfasst.

Dabei kann es bevorzugt sein, dass der Biegebalken passiv ist, das bedeutet bevorzugt, dass er durch die Schalldruckwellen zu einer Schwingung veranlasst wird. Diese erzeugen dabei wiederum durch die Verformung des piezoelektrischen Materials eine Spannung, welche auf dem piezoelektrischen Effekt beruht. Der (direkte) piezoelektrische Effekt beschreibt bevorzugt das Auftreten einer elektrischen Spannung und/oder eine Änderung der Impedanz an einem aus entsprechendem Material gefertigten Festkörper, wenn er elastisch verformt wird. Die Spannung kann z. B. durch geeignete Kontaktierung abgegriffen und durch eine entsprechende elektronische Schaltung ausgelesen werden.

Es kann ebenso bevorzugt sein, dass der Biegebalken aktiv ist, das bedeutet insbesondere, dass er aufgrund des inversen piezoelektrischen Effekts zu einer Schwingung veranlasst wird. Der piezoelektrische Effekt beschreibt bevorzugt die Verformung eines Materials bei Anlegen einer elektrischen Spannung und/oder eines elektrischen Feldes, wodurch insbesondere durch das Material eine Kraft ausgeübt werden kann. Durch die Schalldruckwellen kann dabei bevorzugt eine Variation der Dämpfung des schwingenden Balkens verursacht werden, welche messbar ist, z. B. durch eine Änderung der Resonanzfrequenz des schwingenden Balkens.

Ein passiv aufgrund von Schalldruckwellen schwingender Balken kann bevorzugt ebenso ausgelesen werden, z. B. durch kapazitive, magnetische und/oder piezoresistive Methoden. Die Idee dabei ist bevorzugt ebenfalls, dass durch die Schwingung eine elektrisch auslesbare Veränderung erzeugt wird, z. B. basierend auf einem sich ändernden magnetischen Fluss durch einen mitschwingenden Magneten, durch eine sich ändernde Kapazität zwischen einer schwingenden und einer feststehenden Elektrode und/oder durch einen sich ändernden elektrischen Widerstand in einem piezoresistiven Material.

Ein Mikrofon umfasst vorzugsweise eine schwingfähig gelagerte Membran, welche durch Schalldruckwellen zu Schwingungen angeregt wird, welche wiederum elektrisch auslesbar ist, ähnlich dem vorstehend beschriebenen Balken. Dabei können ebenfalls kapazitive, piezoelektrische und/oder piezoresistive Messmethoden der Schwingungsauslegung zur Anwendung kommen.

Bevorzugt kann ebenso ein optisches Mikrofon zur Anwendung kommen, wobei dies Schwingungen vorzugsweise durch Reflektion z. B. eines Laserstrahls auf der Membran in ein optisches Signal umgewandelt werden kann, welches z. B. in einer interferometrischen Anordnung ausgelesen wird.

In einer weiteren bevorzugten Ausführungsform der Erfindung ist der Sensor, bevorzugt der MEMS-Sensor ein kapazitives Mikrofon, umfassend eine MEMS-Membran als Elektrode sowie eine Gegenelektrode und wobei die MEMS-Membran bevorzugt eine maximale Ausdehnung in mindestens eine Richtung aufweist von 100 μm bis 1500 μm, insbesondere 200 bis 1000 μm. Diese Ausführungsform stellt eine ideale Verbindung aus Kompaktheit und Sensibilität des Sensors da.

Bevorzugt weist die Membran des Mikrofons, insbesondere die MEMS-Membran, eine kleine Öffnung, welche bevorzugt Apertur genannt wird, auf. Insbesondere, wenn die (MEMS-) Membran den ganzen Querschnitt des Sensorkanals umfasst und somit ein trennendes Element zwischen Detektionskammer und Referenzkammer im Sensorkanal darstellt, welche insbesondere druckdicht sind, kann eine Apertur bzw. ein Ventilationsloch vorzugsweise zum Druckausgleich umfasst sein. So kann unter anderem die Langlebigkeit der Membran gesteigert werden.

In einer weiteren bevorzugten Ausführungsform der Erfindung ist der Sensor ein Durchflusssensor, bevorzugt ein thermischer Durchflusssensor, ein Hitzedraht-Anemometer, ein thermoelektrisches Anemometer und/oder ein resistives Anemometer.

Anstelle eines Schalldruckdetektors können durch Druckunterschiede entstehende Gasflüsse im Sensorkanal auch durch einen Durchflusssensor detektiert werden. Ein Durchflusssensor ist bevorzugt ein Sensor, welcher den Durchfluss eines Gases durch einen Kanal, ein Rohr und/oder ein Röhrchen messen kann. Dieses ist vorzugsweise der Sensorkanal. Bei dieser Ausführungsform ist insbesondere bevorzugt, dass eine Apertur zwischen Detektionskammer und Referenzkammer vorliegt, damit ein Durchfluss im Sensorkanal stattfindet, welcher messbar ist.

Ein thermischer Durchflusssensor beruht bevorzugt auf dem Prinzip, dass die Wärme eines beheizten Elementes, z. B. eines Heizdrahts, in Abhängigkeit von der Strömungsgeschwindigkeit eines Gases entzogen wird. Der Fachmann weiß, wie er somit aus der messbaren Strömungsgeschwindigkeit auf die bei einer PAS erzeugten Schalldruckvariationen und schließlich auf eine Gaskonzentration schließen kann.

Ein Anemometer wird bevorzugt eine Vorrichtung zur lokalen Messung der Geschwindigkeit eines Strömungsfeldes eines Fluides bezeichnet.

Ein Hitzedraht-Anemometer wird vorzugsweise eine stromdurchflossene Sensorfläche und/oder ein Draht als Sonde verwendet und elektrisch erwärmt. Die verwendeten Materialien haben bevorzugt einen temperaturabhängigen Widerstand, welcher sich insbesondere mit steigender Temperatur erhöht. Die elektrisch zugeführte Wärmeleistung wird von der Strömung des Fluides in Abhängigkeit von dessen Geschwindigkeit teilweise als Wärmeverlustleistung abtransportiert. Es kann vorzugsweise der Heiz-Strom konstant gehalten und der Spannungsabfall am Widerstand gemessen werden. Die gemessene Spannung ist dann vorzugsweise proportional zur Temperatur der Sonde, wobei mit steigender Strömungsgeschwindigkeit sich die Sonde weiter abkühlt und sich die gemessene Spannung bevorzugt verringert.

Es kann ebenso vorzugsweise die Temperatur konstant gehalten werden, wobei der Strom zum Heizen je nach Abkühlung durch das strömende Gas variiert.

Es kann ebenso bevorzugt ein thermoelektrisches Anemometer und/oder ein resistives Anemometer zum Einsatz kommen. Auch ein Ultraschallanemometer kann geeignet sein. Hierbei werden Ultraschallwellen vom Gas, in dem sie sich ausbreiten, mitgeführt, sodass die Laufzeit von Signalen über eine Messstrecke fester Länge von der Durchströmung der Messstrecke abhängt. Bevorzugt entspricht die Länge des Sensorkanals der Messstrecke zwischen Ultraschallgeber und einem Ultraschallsensor, sodass präzise der Durchfluss zwischen Detektions- und Referenzkammer bestimmbar ist.

Vorzugsweise kann auch eine Thermosäule zum Einsatz kommen. Dies ist vorzugsweise ein elektrisches Bauelement, durch das thermische Energie in elektrische Energie umgewandelt werden kann. Die Thermosäule kann z. B. bei der Verwendung eines Hitzedraht-Anemometers, welches bei konstanter Temperatur gehalten werden soll, Verwendung finden.

Aufgrund der bevorzugt fehlenden mechanischen Komponenten sind Sensoren dieser Ausführungsform besonders einfach und kompakt herstellbar und dabei sehr robust.

In einer weiteren bevorzugten Ausführungsform der Erfindung liegt das Durchflusssensor in dem Sensorkanal vor und bildet eine Apertur, welche bevorzugt eine maximale Ausdehnung in mindestens eine Richtung von 100 $\mu$m bis 1500 $\mu$m, insbesondere von 200 $\mu$m bis 1000 $\mu$m aufweist.

Durch die Größe der Apertur bzw. des Ventilationsloches kann die Empfindlichkeit und/oder Dynamik des Gassensors vorteilhafterweise eingestellt werden. Dies hängt bevorzugt von der absoluten Größe der Apertur ab. In einigen Fällen hängt dies auch bevorzugt von der relativen Größe im Vergleich zu den Abmessungen des Sensorkanals, insbesondere des Querschnitts des Sensorkanals, ab. Die vorgenannten Größen der Apertur haben sich insbesondere bei den in diesem Dokument genannten Abmessungen als besonders vorteilhaft erwiesen.

Die Apertur umfasst dabei vorzugsweise die Komponenten des Sensors, z. B. das Heizelement und die Thermosäule, z. B. in einem Randbereich der Apertur und oder als Elemente, welche durch ihre äußeren Abmessungen die Apertur bilden.

In einer weiteren bevorzugten Ausführungsform sind die Detektionskammer und die Referenzkammer mindestens teilweise durch eine Trennwand getrennt, welche mindestens eine Apertur aufweist, welche den Sensorkanal bildet und wobei der Sensor mindestens teilweise auf der Trennwand angeordnet vorliegt und dafür eingerichtet ist, einen Gasfluss zwischen der Detektionskammer und Referenzkammer durch die mindestens eine Apertur zu messen.

Bei der Trennwand handelt es sich bevorzugt um eine Membran. Vorzugsweise wird ein Gasfluss zwischen Detektionskammer und Referenzkammer ausschließlich durch die mindestens eine Apertur innerhalb der Trennwand ermöglicht. Die übrigen Bereiche der Trennwand sind hingegen bevorzugt gasdicht.

In der bevorzugten Ausführungsform bildet die Apertur in der Trennwand bzw. Trennmembran mithin bevorzugt einen Sensorkanal im Sinne der Erfindung, welcher die Detektionskammer und Referenzkammer verbindet. Zum Zwecke der Messung eines Gasflusses durch die Apertur liegt der Sensor bevorzugt angrenzend oder in der Nähe der Apertur bzw. den Sensorkanal mindestens teilweise auf der Trennwand installiert vor.

Angrenzend bzw. in der Nähe meint bevorzugt eine Distanz mindestens eines Elementes des Sensors von weniger als 20 $\mu$m, bevorzugt weniger 10 $\mu$m, weniger 5 $\mu$m zum Rand der Apertur. Die örtliche Nähe des Sensors zur Apertur erlaubt bevorzugt die Messung mindestens eines physikalischen Parameters durch den Sensor, welche sich aufgrund eines Gasflusses durch die Apertur ändert.

In bevorzugten Ausführungsformen basiert das Messprinzip des Sensor auf einer Modulation einer Temperatur und/oder eines Wärmestromes in einem die Apertur umgebenden Bereich der Trennwand.

In einer bevorzugten Ausführungsform umfasst der Sensor mindestens ein Heizelement sowie mindestens einen Temperatursensor, welche derart auf der Trennwand installiert vorliegen, dass die mindestens eine Apertur sich zwischen dem Heizelement und dem mindestens einen Temperatursensor befindet, sodass ein Gasfluss zwischen Detektionskammer und Referenzkammer durch die mindestens eine Apertur anhand einer Modulation eines Wärmestroms zwischen dem Heizelement und dem mindestens einen Temperatursensor messbar ist.

Bei dem Heizelement kann es sich beispielsweise um einen Heizwiderstand handelt, welcher elektrische Energie in Wärme umwandelt. Das Heizelement wird bevorzugt auf eine gegenüber der Umgebungstemperatur erhöhte Temperatur gesteuert. Sowohl über die Trennwand als auch die Apertur erfolgt ein Wärmetransport zum Temperatursensor.

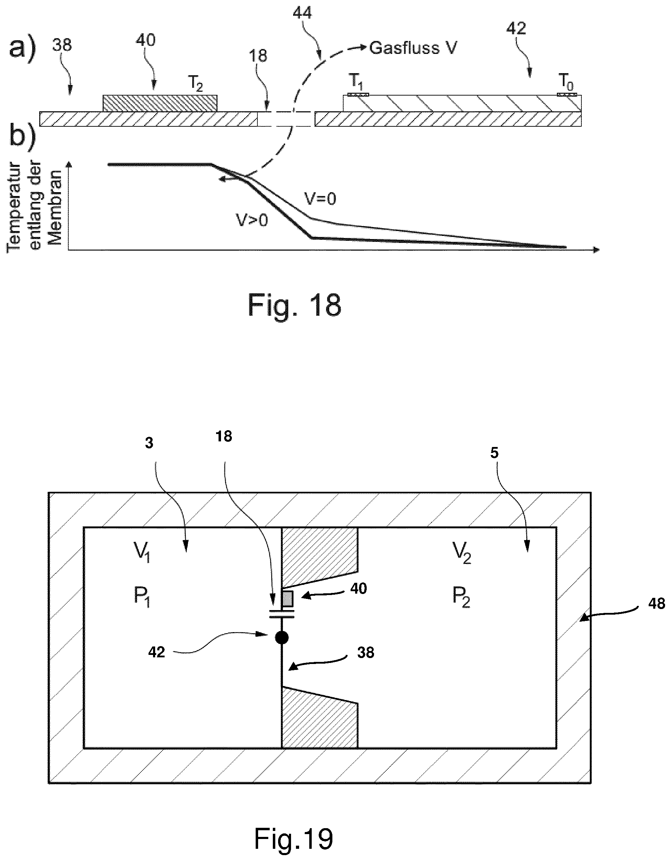

Vorteilhaft wird der Wärmetransport unmittelbar durch den Gasfluss moduliert. So hängt der Temperaturabfall stark davon ab, mit welcher Geschwindigkeit Gas durch die Apertur strömt. Der Effekt ist unabhängig davon, ob ein gerichteter oder alternierende Gasfluss erfolgt. In jedem Fall vermindert der Gasfluss effektiv der Wärmetransport sodass ein verstärkter Temperaturabfall messbar ist (vgl. Abbildung 18).

Die Modulation des Wärmestroms entlang der Trennwand bzw. Apertur kann beispielsweise als Differenztemperatur zwischen einer Temperatur $T_1$ in unmittelbarer Nähe zur Apertur und einer Referenztemperatur $T_0$ in größerer Entfernung von der Apertur gemessen werden. Die Temperaturmessung kann auf verschiedene Weise sowohl thermisch als auch thermoelektrisch erfolgen und reflektiert unmittelbar die Modulation des Wärmetransportes durch den Gasstrom.

Ein besonders bevorzugter Temperatursensor ist eine Thermosäule. Eine Thermosäule (engl. *thermopile)* weist bevorzugt mehreren seriellen (in Reihe) oder parallelen Thermoelementen (engl. *thermocouplers)* auf

Thermosäulen basieren bevorzugt auf dem Prinzip des thermoelektrischen Effekts. Demnach wird eine Spannung generiert, wenn ungleiche Metalle *(Thermoelemente)* der Thermosäule einer Temperaturdifferenz ausgesetzt werden.

Die Thermoelemente messen bevorzugt die Temperaturdifferenz von ihrem Verbindungspunkt bis zu jenem Punkt, an dem eine Ausgangsspannung des Thermoelements gemessen wird.

Sobald ein geschlossener Stromkreis unterschiedliche Metalle umfasst und eine Temperaturdifferenz zwischen den Verbindungsstellen und den Punkten des Übergangs von einem Metall zum anderen besteht, wird ein Strom erzeugt, analog zu einer Potentialdifferenz zwischen der warmen und der kalten Verbindungsstelle *(hot and cold junction).*

Thermoelemente können als Thermoelementpaare in Reihe geschaltet werden, wodurch sich die Größe des Spannungsausgangs erhöht. Thermosäulen reagieren mithin bevorzugt nicht auf die absolute (Umgebungs-)Temperatur, sondern erzeugen eine Ausgangsspannung, welche proportional und somit sehr sensitiv zu einer lokalen Temperaturdifferenz oder einem Temperaturgradienten ist.

Im Falle der Implementierung einer Thermosäule wird diese bevorzugt derart installiert, dass warme Verbindungsstelle *(hot junction)* auf einer der Apertur zugewandte Seite vorliegt, während die kalte Verbindungsstelle *(cold junction)* sich auf einer von der Apertur abgewandten Seite befindet.

Das Ausgangssignal der Thermosäule ist vorteilhaft überaus sensitiv in Bezug auf Temperaturdifferenzen zwischen diesen beiden Punkten. Die Modulation des Wärmetransportes von dem Heizelement, bevorzugt zur *hot junction* einer Thermosäule kann somit schnell und zuverlässig gemessen werden.

In einer weiteren bevorzugten Ausführungsform umfasst der Sensor mindestens ein Heizelement, welches zu der mindestens einen Apertur mindestens eine korrespondierende Öffnung aufweist und auf der Trennwand installiert vorliegt und wobei ein Gasfluss zwischen Detektionskammer und Referenzkammer durch die mindestens eine Apertur sowie die korrespondierende Öffnung des Heizelementes anhand einer Kühlung des Heizelementes messbar ist.

Das Heizelement kann beispielsweise als ein flächiger Heizwiderstand (Pad) ausgestaltet sein und eine Vielzahl von Öffnungen umfassen, die zu Aperturen einer darunter liegenden der Trennwand korrespondieren. Korrespondieren meint bevorzugt, dass die Öffnungen und Aperturen passgenau (vorzugsweise deckungsgleich und zentriert) zueinander angeordnet sind, sodass jeweils eine Öffnung und Apertur einen (Sensor)kanal bilden.

Ein Gasfluss durch die Apertur(en) führt unmittelbar zu einem Abkühlen des Heizelementes selbst, welches beispielsweise mittels eines Temperatursensors (z.B. thermisch oder thermoelektrisch) gemessen werden kann.

In einer bevorzugten Ausführungsform weist die Trennwand bzw. Trennmembran des photoakustischen Gassensors mindestens 2, 3, 4, 5, 6, 7, 8, 9, 10 oder mehr Aperturen auf.

Im Falle der obig beschriebenen Messung des Gasflusses durch die Aperturen anhand einer Abkühlung des Heizelementes kann die Bereitstellung einer Vielzahl von Aperturen den kühlenden Effekt vorteilhaft verstärken und das Signal-zu-Rausch Verhältnis zusätzlich verbessern.

Auch für ein Messprinzip, welches auf der Detektion der Modulation eines Wärmestroms durch den Gasfluss basiert, kann die Bereitstellung einer Vielzahl von Aperturen zu präziseren Messergebnissen führen.

Wie in Abb. 22 illustriert, kann es beispielsweise bevorzugt sein, ein zentrales Heizelement auf einer Trennmembran zu installieren, zu welchem beidseitig eine Vielzahl von Aperturen vorliegen. Jeder Apertur kann eine Temperatursensor, bevorzugt eine Thermosäule zugeordnet sein, welche eine Modulation des Wärmestromes von dem Heizelement zum Temperatursensor im Falle eines PAS-Signales detektiert.

Das detektierbare Ausgangssignal basiert vorteilhaft auf einer Vielzahl von Thermoelementen bzw. Thermosäulen, wodurch noch sensitivere Messungen möglich sind.

Neben der Anzahl der Aperturen kann auch die Dimensionierung der Apertur optimiert werden, um die Detektionsqualität zu verbessern.

In einer bevorzugten Ausführungsform weist die mindestens eine Apertur eine Querschnittsfläche zwischen 1 $\mu m^2$ und 10 000 $\mu m^2$, bevorzugt 5 $\mu m^2$ und 1000 $\mu m^2$, besonders bevorzugt 10 $\mu m^2$ und 100 $\mu m^2$ auf.

Vorteilhaft kann durch die Wahl der bevorzugt genannten Querschnittsfläche der Apertur gewährleistet werden, dass selbst bei sehr gering ausgeprägten PAS-Signalen hinreichend hohe Durchflussgeschwindigkeiten durch die Apertur auftreten, um zuverlässig detektiert zu werden. Anderseits sind die Aperturen nicht zu klein, als das diese zu einem stark erhöhten akustischen Widerstand führen, welcher die dynamische Auflösung des Sensors vermindert.

Die mögliche Implementation der vorgenannten Aperturen im Rahmen einer Fertigung des photoakustischen Gassensor in MEMS-Technologie erlaubt somit sowohl eine hohe Sensitivität als eine weitere Miniaturisierung.

Der Wärmewiderstand der Membran oder auch die Wärmekapazität der *hot junctions* eines Temperatursensor können zusätzlich optimiert werden, um einen besonders hohes Signal-zu-Rausch Verhältnis für die Detektion der PAS-Signale zu gewährleisten.

In einer weiteren bevorzugten Ausführungsform der Erfindung bilden die Detektorkammer, der Sensorkanal und die Referenzkammer ein geschlossenes System, welches mit einem Referenzgas gefüllt ist und wobei ein zu analysierendes Gas im Strahlengang zwischen dem Infrarotemitter und der Detektionskammer vorliegt, sodass der Anteil des Referenzgases im zu analysierenden Gas anhand der Ausbildung von Schalldruckwellen in der Detektionskammer messbar ist.

Die Detektionskammer enthält bevorzugt ein Referenzgas, welches auf den IR-Emitter dergestalt abgestimmt ist, dass in die Detektionskammer eindringende, modulierte IR-Strahlung eine PAS mithilfe des dortigen Gases ermöglicht. Ist nun in der Messstrecke zwischen dem Infrarotemitter und der Detektionskammer ebenfalls ein Gas enthalten, welches die IR-Strahlung absorbiert (insbesondere das Referenzgas) und findet PAS statt, dann wird die Stärke der Absorption in der Detektionskammer vermindert. Durch die Größe der Minderung lässt sich auf die Konzentration des Gases in der Messstrecke schließen. Dabei ist vorzugsweise die Ausbildung von Schalldruckwellen in der Detektionskammer umso kleiner, umso mehr vom Referenzgas im Strahlengang außerhalb der Detektionskammer vorhanden ist, da dann insbesondere bereits dort eine Absorption und eine Anregung stattfindet. Bevorzugt wird hierbei ein schmalbandiger IR-Emitter eingesetzt, damit möglichst nur das Referenzgas angeregt werden kann.

Beispielsweise können Detektor- und Referenzkammer verschlossen und mit einem Referenzgas(gemisch) z.B. $CO_2$ in $N_2$ gefüllt sein. Soll nunmehr der $CO_2$ Anteil in der umgebenden Luft gemessen werden, wird der IR Emitter, der bevorzugt breitbandig abstrahlt, von der lateralen Zelle beabstandet. In der Beabstandung durchquert das modulierte IR Licht die umgebende Luft (Messstrecke bzw. "Gas under test") und trifft dann erst in die Detektorkammer. Entsprechend der Konzentration von CO2 in der Luft, wird die Strahlung in der Wellenlänge des $CO_2$ absorbiert und diese Energie fehlt beim Eindringen der Rest-IR Strahlung in der Detektorkammer. Dort wird die verbleibende IR Strahlung im Referenzgas(gemisch) absorbiert und führt zu einem Schalldruck-Ereignis, welches wie beschrieben über Sensorkanal in die Referenzkammer ausglichen wird, wobei der Sensor den Druckausgleich als PAS-Signal messen kann.

Diese Messmethode ist besonders sensitiv für eine Messung eines Anteils eines zuvor bestimmten Gases. Dabei kann ein kleiner Freistrahlzwischenraum zwischen IR-Emitter und Detektionskammer ausreichend sein. So kann sehr einfach ein kompakter Gassensor bereitgestellt werden, der eine Konzentration eines bestimmten Gases in der Umgebung des Gassensors messen kann.

In einer weiteren bevorzugten Ausführungsform der Erfindung stellt die Detektionskammer ein offenes System dar, welches eine oder mehrere Öffnungen aufweist, sodass ein zu analysierendes Gas in die Detektionskammer einströmen oder diffundieren kann.

Die Detektor- und Referenzkammer kommunizieren beispielsweise mit dem zu analysierenden Gasgemisch (z.B. Luft) über Öffnungen. Die Öffnungen können bevorzugt klein genug sein, um sicherzustellen, dass die akustische Ventilationsfrequenz unterhalb der Messfrequenz liegt. Alternativ können die Öffnungen auch bevorzugt mit Ventilen verschließbar sein, zum Einlass des analysierenden Gasgemisches selektiv geöffnet und für die Messung verschlossen werden. Bevorzugt strahlt der IR-Emitter moduliert und wellenlängenselektiv in die Referenzkammer. Soll beispielsweise eine Gaskomponente (z.B. die CO2 Konzentration) in diesem Gasgemisch bestimmt werden, wird bevorzugt it der spezifischen Wellenlänge für die Gaskomponente (z.B. $CO_2$ angeregt. Dies hat das zur Folge, dass ein Schallimpuls bzw. eine Schalldruckwelle proportional zur Konzentration dieser Gaskomponente im Gasgemisch entsteht. Der Schalldruck fällt über den Sensorkanal bzw. die Apertur in die Referenzkammer ab. Mittels des Sensors bzw. Sensorelement welcher sich im Sensorkanal befindet oder an diesen angrenzt, kann der Druckausgleich wie beschrieben vermessen werden.

Die Öffnungen sind dabei bevorzugt groß genug, dass sie einen geeigneten Strömungswiderstand haben für ein Eindiffundieren haben und/oder den Aufbau einer akustischen Druckwelle in der Detektionskammer nicht verhindern. Herstellungsbedingt ist ein Querschnitt bevorzugt, der aus einem Ätzprozess hervorgeht. Beim nasschemischen Ätzen (z. B. mit Kaliumhydroxid - KOH) gibt es vorzugsweise eine Abhängigkeit von der Kristallrichtung, beim Trockenätzen kann ein im Wesentlichen quadratischer Querschnitt bevorzugt sein.

In einer weiteren bevorzugten Ausführungsform der Erfindung weisen die Detektionskammer zwei oder mehr Öffnungen auf mit einer maximalen Ausdehnung in mindestens eine Richtung von 1 nm bis 500 $\mu$m.

Diese Größen haben sich bei einem kompakten Gassensor als besonders geeignet erwiesen.

In einer weiteren bevorzugten Ausführungsform der Erfindung erlaubt der Infrarotemitter eine wellenlängenselektive Abstrahlung und/oder im Strahlengang zwischen dem Infrarotemitter und der Detektionskammer liegt ein wellenlängenselektiver Filter, beispielsweise eine Fabry-Perot-Filter, vor.

Der wellenlängenselektive Filter ist bevorzugt durchstimmbar. So kann der Gassensor zur Bestimmung des Vorhandenseins und/oder der Konzentration verschiedener Gase verwendet werden, welche bei verschiedenen Wellenlängen zur PAS angeregt werden können.

Ein wellenlängensensitiver Infrarotemitter kann z. B. ein durchstimmbarer Laser sein und/oder mehrere Laser verschiedener Wellenlängen umfassen.

Bei Verwendung eines durchstimmbaren Filters kann insbesondere ein IR-Emitter mit einem breiten Spektrum zum Einsatz kommen, z. B. eine LED und/oder ein thermischer Emitter.

In einem weiteren Aspekt betrifft die Erfindung ein Verfahren zur Herstellung eines photoakustischen Gassensors wie oben beschrieben umfassend die Schritte

- Bereitstellen mindestens zweier Substratlagen
- Aufbringen mindestens einer Lage eines leitfähigen Materials auf einer ersten Substratlage und/oder Strukturierung eines leitfähigen Materials auf der ersten Substratlage zur Bildung eines MEMS- Sensors
- Ätzen von Kavitäten in der ersten und/oder zweiten Substratlage
- Bonden der ersten Substratlage mit der zweiten Substratlage zur Bildung der Detektionskammer, der Referenzkammer und des Sensorkanales, wobei der Sensorkanal die Detektionskammer mit der Referenzkammer verbindet und in dem Sensorkanal der Sensor integriert vorliegt oder an den Sensorkanal angrenzt.

Der durchschnittliche Fachmann erkennt, dass technische Merkmale, Definitionen und Vorteile bevorzugter Ausführungsformen des erfindungsgemäßen photoakustischen Gassensors auch für das erfindungsgemäße Herstellungsverfahren gelten.

Ein Aufbringen mindestens einer Lage eines leitfähigen Materials umfasst bevorzugt neben dem Aufbringen einer Lage ebenso das Aufbringen mehrerer Lagen und insbesondere eines Lagensystems. Ein Lagensystem umfasst dabei mindestens zwei planvoll zueinander aufgebrachte Lagen.

Das Aufbringen einer Lage oder eines Lagensystems dient bevorzugt der Definition des Sensors auf der ersten Substratlage.

Ein Aufbringen umfasst beispielsweise ein Abscheiden, z. B. im Falle eines Substrats aus Polysilizium.

Das Ätzen von Kavitäten kann vorzugsweise in einer Substratlage vorgenommen werden, wobei die Kavitäten nur von der anderen Lage, insbesondere dem Deckelwafer, zu den Kammern im Wesentlichen verschlossen werden. Dies ist insbesondere für eine einfache und kostengünstige Herstellung vorteilhaft. Als zweite Lage bzw. Deckelwafer kann dabei insbesondere ein PCB oder eine Keramik mit Leiterbahnen zum Einsatz kommen.

In einer bevorzugten Ausführungsform der Erfindung ist

- ein Ätzen und/oder eine Strukturierung ausgesucht aus der Gruppe umfassend Trockenätzen, nasschemisches Ätzen und/oder Plasmaätzen, insbesondere Reaktives Ionenätzen, Reaktives Ionentiefenätzen (Bosch-Prozess);
- das Aufbringen ausgesucht aus der Gruppe umfassend physikalische Gasphasenabscheidung (PVD), insbesondere thermisches Verdampfen, Laserstrahlverdampfen, Lichtbogenverdampfen, Molekularstrahlepitaxie, Sputtern, chemische Gasphasenabscheidung (CVD) und/oder Atomlagenabscheidung (ALD) und/oder
- das Verbinden der Substratlagen ausgesucht aus der Gruppe umfassend Waferbonden, Direktbonden, Oberflächenaktiviertes Bonden, Plasmaaktiviertes Bonden, Anodisches Bonden, Eutektisches Bonden, Schweiß-Bonden, Glas-Frit-Bonden und/oder Adhäsives Bonden.

Oberflächenaktiviertes Bonden und/oder Plasmaaktiviertes Bonden beziehen sich besonders auf eine Vorbehandlung der Waferoberflächen und/oder Aktivierung des Bondprozesses durch entsprechende Verfahren, z. B. Plasmavorbehandlung. Es können geringe Fügezeiten und/oder hohe mechanische Festigkeiten erreicht werden.

In einem weiteren Aspekt betrifft die Erfindung ein Verfahren zur Analyse von Gas, umfassend

a. Bereitstellung eines photoakustischen Gassensors zur Analyse von Gas gemäß dieser Offenbarung

b. Bereitstellung eines zu analysierenden Gases im Strahlengang zwischen dem Infrarotemitter und der Detektionskammer oder innerhalb der Detektionskammer

c. Bestrahlung des zu analysierenden Gases und der Detektionskammer mit einer mit einer Modulationsfrequenz modulierten Infrarotstrahlung zur Erzeugung von Schalldruckwellen

d. Messung der erzeugten Schalldruckwellen mittels des Sensors

e. Charakterisierung des zu analysierenden Gases anhand der Messergebnisse.

Der durchschnittliche Fachmann erkennt, dass technische Merkmale, Definitionen und Vorteile bevorzugter Ausführungsformen des erfindungsgemäßen photoakustischen Gassensors auch für das erfindungsgemäße Verfahren zur Analyse von Gas gelten.

## DETAILLIERTE BESCHREBUNG

Im Folgenden soll die Erfindung an Hand von Beispielen näher erläutert werden, ohne auf diese beschränkt zu sein.

Kurzbeschreibung der Abbildungen

Abb. 1       Schematische Darstellung des Gassensors.

Abb. 2       Gassensor mit Freistrahl-Messstrecke.

Abb. 3       Gassensor mit Öffnung in Detektionskammer.

Abb. 4       Gassensor mit Durchflusssensor.

Abb. 5       Gassensor mit kapazitivem Mikrofon.

Abb. 6       Aus zwei gebondeten Waferlagen hergestellter Gassensor.

Abb. 7-17    Verschiedene Herstellungsschritte eines Gassensors aus zwei Waferlagen.

Abb. 18-22   Bevorzugte Ausführungsform eines Sensors zur Messung eines PAS-Signales anhand eines Gasfluss zwischen Detektionskammer und Referenzkammer durch die Apertur einer Trennwand.

Abb. 23      Schematische Illustration eines bevorzugten Modellierungsansatz zur Optimierung der Detektionsqualität des beschriebenen Sensors.

Ausführliche Beschreibung der Abbildungen

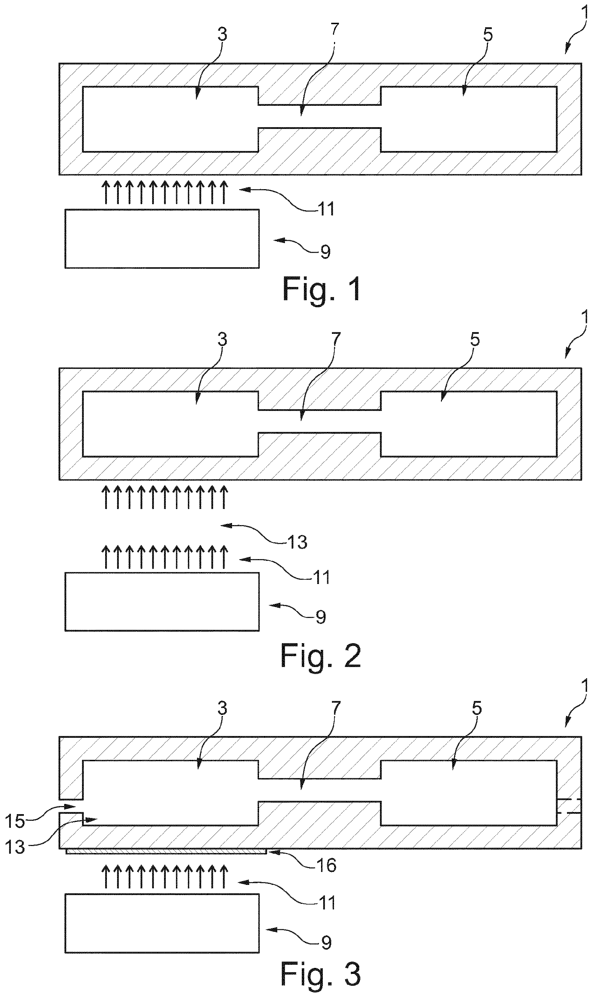

Abbildung 1 zeigt den Gassensor 1 mit der Detektionskammer 3, der Referenzkammer 5 und dem beide Kammern verbindenden Sensorkanal 7. Der IR-Emitter 9 ist vor der Detektionskammer 3 angeordnet. Detektionskammer 3 und Referenzkammer 5 sind lateral zueinander in einer (lateralen) Ebene angeordnet, welche senkrecht zur Strahlung 11 des IR-Emitters 9 verläuft. Detektorkammer 3 und Referenzkammer 5 werden durch einen vorzugsweise in der lateralen Ebene verlaufenden Sensorkanal 7 verbunden. Die Strahlung 11 des IR-Emitters 9 dringt dabei in die Detektorkammer 3 ein und kann dort bei Vorliegen eines entsprechenden Gases durch PAS eine Modulation des Schalldrucks erzeugen. Da ansonsten zwischen Referenzkammer 5 und Detektionskammer 3 gleiche Druckverhältnisse vorliegen, werden entstehende Schalldruckwellen durch PAS über den Sensorkanal 7 ausgeglichen, wobei dort der Sensor (nicht gezeigt) zu ihrer Detektion vorliegt.

Abbildung 2 zeigt eine Freistrahl-Messstrecke 13 zwischen IR-Emitter 9 und Detektionskammer 3. Die Detektionskammer 3 enthält bevorzugt ein Referenzgas, welches auf den IR-Emitter 9 dergestalt abgestimmt ist, dass in die Detektionskammer 3 eindringende, modulierte IR-Strahlung 11 eine PAS mithilfe des dortigen Gases ermöglicht. Ist nun in der Messstrecke 13 ebenfalls ein Gas enthalten, welches die IR-Strahlung 11 absorbiert (insbesondere das Referenzgas) und findet PAS statt, dann wird die Stärke der Absorption in der Detektionskammer 3 vermindert. Durch die Größe der Minderung lässt sich auf die Konzentration des Gases in der Messstrecke 13 schließen. Bevorzugt wird hierbei ein schmalbandiger IR-Emitter 9 eingesetzt, damit möglichst nur das Referenzgas angeregt werden kann.

Abbildung 3 zeigt eine Detektorkammer 3 mit einer Öffnung 15, sodass ein den Gassensor umgebendes Gas in die Detektorkammer 3 eindringen und dort ggf. zu einer PAS angeregt werden kann. Hierdurch kann das Vorhandensein desjenigen Gases festgestellt werden. Dies beruht insbesondere darauf, dass jedes Gas nur bei mindestens einer bestimmten Wellenlänge absorbiert und somit angeregt werden kann. Dabei wird vorzugsweise ein breitbandiger IR-Emitter 9 z. B. über einen Filter 16 durchgestimmt, so dass die jeweilige Wellenlänge der IR-Strahlung 11 bekannt ist und eine durch den Sensor detektierte Anregung somit einem bestimmten Gas zugeordnet werden kann.

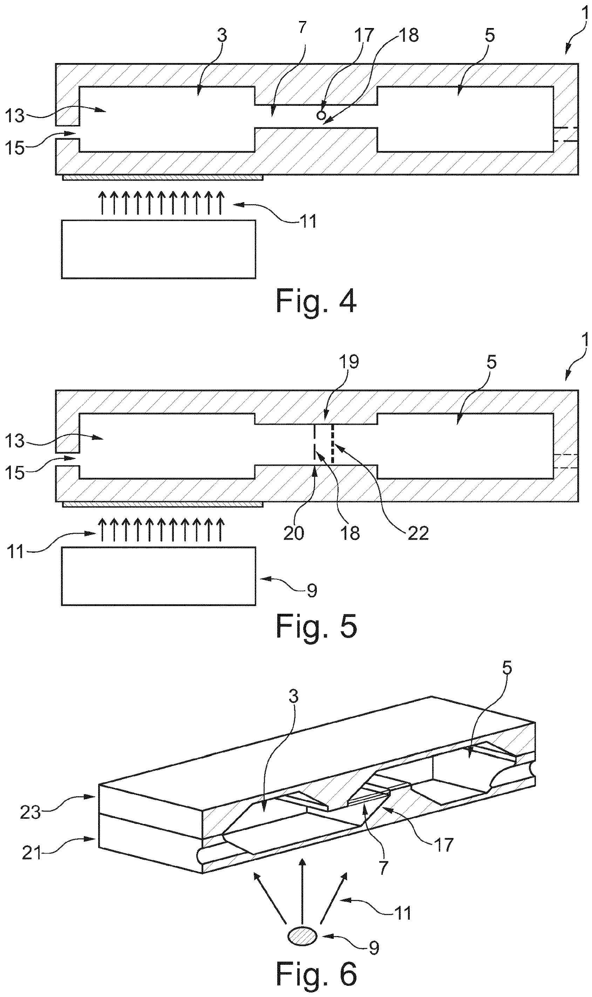

Abbildung 4 zeigt insbesondere einen -Sensor in Form eines Durchflusssensors 17 (Hitzdraht-Anemometer), welcher im Sensorkanal 7 vorliegt. Rund um den Sensor ist eine Apertur 18, sodass das Gas den Sensorkanal 7 durchfließen kann. Die Geschwindigkeit des Durchflusses wird bevorzugt bei stattfindender PAS variiert, welche somit detektiert werden kann.

Abbildung 5 zeigt einen Sensor in Form eines kapazitiven Mikrofons 19 umfassend eine MEMS-Membran 20. Die MEMS-Membran weist eine Apertur 18 für einen Druckausgleich auf. So kann die Langlebigkeit der Membran gesteigert werden. Die Membran 20 fungiert vorzugsweise gleichzeitig als Elektrode, so dass Schwingungen der Membran durch Schalldruckwellen mithilfe der (MEMS-) Gegenelektrode 22 messbar gemacht werden können.

Abbildung 6 zeigt einen aus zwei gebondeten Waferlagen hergestellten Gassensor 1. Der untere Systemwafer 21 (grau) enthält Kavitäten und das Sensorelement. Es können ebenso lateral abgeleitete Anschlusspads für etwaige Elektronik zur Auslesung des Sensors sowie optionale durchstimmbare IR Filter auf der Unterseite vorhanden sein. Der Wafer ist möglichst niedrig dotiert zwecks hoher IR Transparenz. Der Deckelwafer **23** (grün) enthält komplementäre Kavitäten und optionale Öffnungen im Deckel (Boden) für einen etwaigen Gasaustausch mit der Umgebungsatmosphäre des Gassensors. Beide Wafer sind vorzugsweise mittels Waferbondtechnik (ggf. hermetisch) aufeinander gebondet.

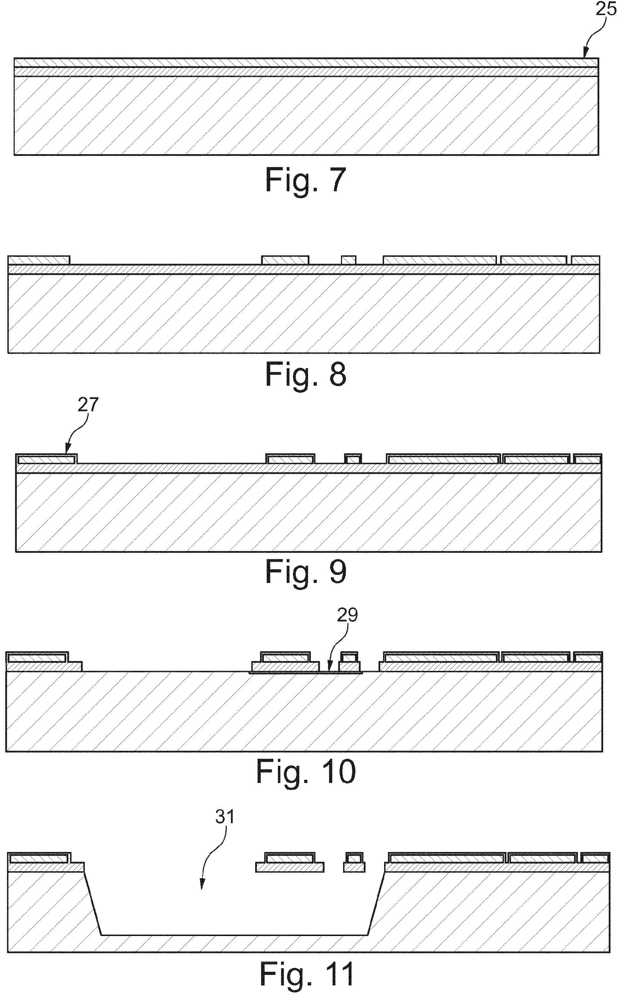

Abbildungen 7-17 zeigen verschiedene Herstellungsschritte eines Gassensors aus zwei Waferlagen. In Abbildung 7 ist ein Ausgangssubstrat für einen Systemwafer **25** gezeigt, welcher z. B. aus einem SOI (Silicon-on-insulator) Wafer/Substrat oder einen Polysilizium on Oxide Wafer/Substrat.

Abbildung 8 zeig eine erste Strukturierung der Substratoberfläche, z. B. durch Trockenätzen.

Abbildung 9 zeigt die Abdeckung des Wafers durch eine dünne Oxidschicht **27.**

In Abbildung 10 wird eine Hartmaske für eine Nassätzprozess vorbereitet. Dabei werden bestimmte Designregeln beachtet, um die gewollten Strukturen zu erlangen. Es kann bspw. eine dünne Polysiliziumschicht **29** zur Beeinflussung des Ätzprozesses verwendet werden.

Abbildung 11 zeigt die resultierende Struktur umfassend eine Kavität **31** sowie mittig angeordnete Strukturen für den Sensor.

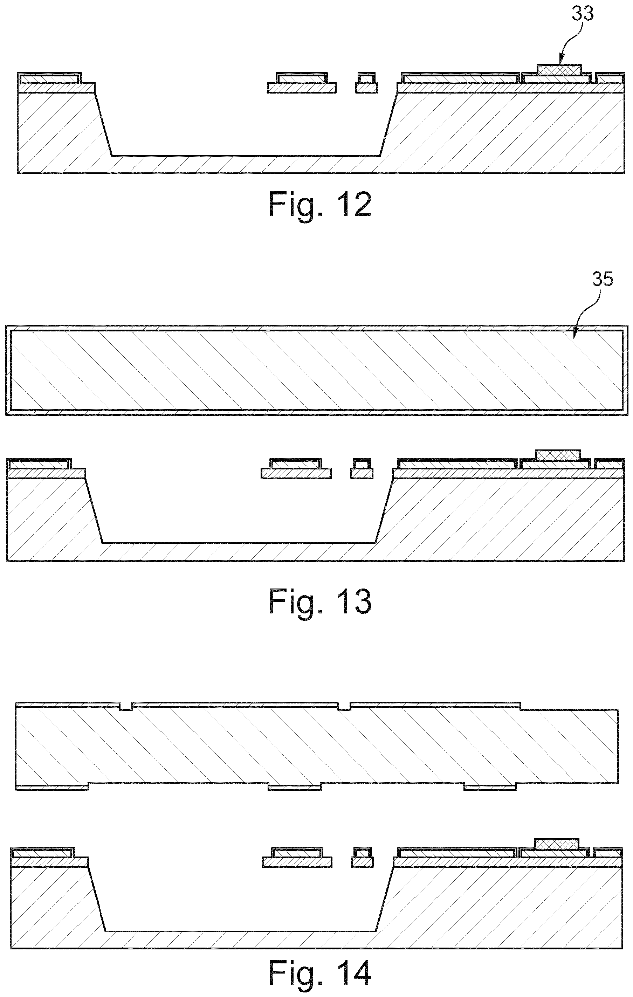

Abbildung 12 zeigt aufgebrachte Durchkontaktierung **33** für die Elektrik und Elektronik und/oder Leiterbahnen. Diese können z. B. Metall umfassen und/oder SOI bzw. Polysilizium.

Abbildung 13 zeigt ein Substrat für den Deckelwafer **35,** welcher mit einer Oxidschicht umgeben ist.

In Abbildung 14 wird dieser Deckelwafer ebenfalls für ein nasschemisches Ätzen vorstrukturiert, indem gezielt die Oxidschicht an einigen Stellen entfernt wird.

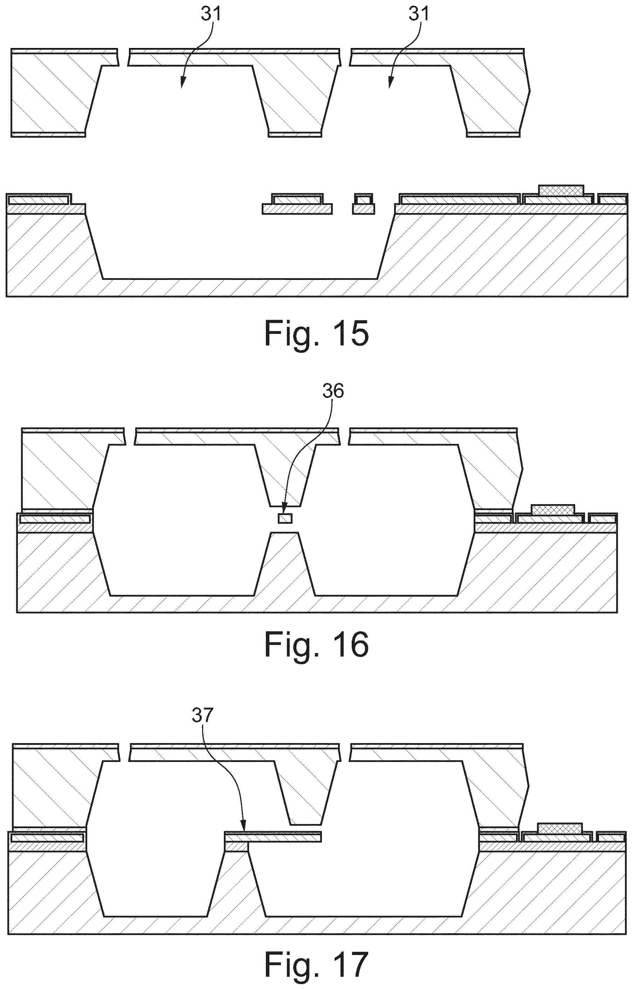

Abbildung 15 zeigt den geätzten Deckelwafer umfassend zwei Kavitäten **31,** welche zusammen mit der einen unteren Kavität Detektions- und Referenzkammer bilden können. Dies entspricht der bevorzugten Ausführungsform, bei der ein unterer Systemwafer den Sensor sowie eine untere Kavität umfasst und ein oberer Deckelwafer zwei zu der unteren Kavität komplementäre obere Kavitäten umfasst, sodass durch Bonden des unteren Systemwafers und des oberen Deckelwafers die Referenzkammer, die Detektionskammer und der Sensorkanal gebildet werden.

Abbildung 16 zeigt die zusammengebrachten Wafer, wobei der Systemwafer nun anders strukturiert ist und zwei zu den Kavitäten des Deckelwafers korrespondierende Kavitäten aufweist. Im Sensorkanal ist ein Heizdraht für ein Anemometer **36** integriert.

Abbildung 17 zeigt dagegen einen integrierten piezoelektrischen Biegebalken **37** als Sensor.

Abbildungen 7 bis 17 verdeutlichen somit die einfache Bauweise, welche in klassischer MEMS- bzw. Halbleiterherstellungstechnik erfolgt.

Abbildungen 18 a, b illustrieren eine bevorzugten Ausführungsform eines Sensors zur Messung eines PAS-Signales anhand eines Gasfluss **44** zwischen Detektionskammer **3** und Referenzkammer **5** durch die Apertur **18** einer Trennwand **44.**

Vorzugsweise wird ein Gasfluss zwischen Detektionskammer **3** und Referenzkammer **5** ausschließlich durch die mindestens eine Apertur **18** innerhalb der Trennwand **44** ermöglicht. Die übrigen Bereiche der Trennwand **44** schließen hingegen die Gasvolumina der Detektionskammer **3** und Referenzkammer **5** gasdicht gegeneinander ab. Bei der Trennwand **44** handelt es sich bevorzugt um eine Membran.

In der bevorzugten Ausführungsform bildet die Apertur **18** in der Trennwand **44** mithin einen Sensorkanal **7,** welcher die Detektionskammer **3** und Referenzkammer **5** verbindet. Der Sensor ist dafür eingerichtet, einen Gasfluss zwischen der Detektionskammer **3** und Referenzkammer **5** durch die mindestens eine Apertur **18** zu messen und liegt zu diesem Zweck angrenzend an die Apertur **18** bzw. den Sensorkanal mindestens teilweise auf der Trennwand **44** installiert vor.

Der Sensor umfasst ein Heizelement **40,** beispielsweise ein Heizwiderstand, sowie einen Temperatursensor **42,** welcher beispielsweise als Thermosäule mit mehreren seriellen oder parallelen Thermoelementen ausgestaltet sein kann.

Das Heizelement **40** kann auf eine gegenüber der Umgebungstemperatur erhöhte Temperatur $T_2$ gesteuert werden. Sowohl über die Trennwand **42** als auch die Apertur **18** erfolgt ein Wärmetransport zum Temperatursensor **42.**

In Abbildung 18b wird der Temperaturverlauf schematisch illustriert. Entlang der Trennwand **42** bzw. Membran fällt die Temperatur über den Bereich der Apertur **18** sowie des Temperatursensors **42** ab.

Vorteilhaft ist der Temperaturabfall stark abhängig von einem Gasfluss, welche durch die Apertur **18** strömt. Wie in der Abbildung illustriert, kann der Gasfluss gleichermaßen in beide Richtungen **18** erfolgen. Insbesondere im Falle einer photoakustischen Anregung der Gasmoleküle in einer der Kammern tritt über den Zeitraum des PAS-Signales ein ventilierender Gasfluss durch die Apertur **18** auf. Der photoakustische Effekt kann unmittelbar über die Modulation des Wärmetransportes nachgewiesen werden. Wie in Abb. 18b illustriert wird durch einen Gasflusses (V>0) der Wärmetransport vermindert und im Bereich der Apertur kommt es zu einem stärkeren Temperaturabfall, als dies ohne Gasfluss (V=0) der Fall wäre.

Die Modulation des Wärmestroms entlang der Trennwand **42** kann beispielsweise als Differenztemperatur zwischen einer Temperatur $T_1$ in unmittelbarer Nähe zur Apertur und einer Referenztemperatur $T_0$ in größerer Entfernung von der Apertur gemessen werden. Die Temperaturmessung kann auf verschiedene Weise sowohl thermisch als auch thermoelektrisch erfolgen und reflektiert unmittelbar die Modulation des Wärmetransportes durch den Gasstrom.

Vorteilhaft ist die Modulation des Wärmetransportes überaus schnell und stellt keinen limitierenden Faktor hinsichtlich einer dynamischen Auflösung des Sensors dar. Der Wärmewiderstand der Membran, die Größe der Apertur oder auch die Wärmekapazität der *hot junctions* eines Temperatursensor können zusätzlich optimiert werden, um einen besonders hohes Signal-zu-Rausch Verhältnis zur Detektion der PAS-Signale zu gewährleisten.

Die Abbildungen 18-20 illustrieren weitere bevorzugte Ausführungsform eines Sensors zur Messung eines PAS-Signales anhand eines Gasfluss **44** durch die Apertur **18** einer Trennwand **44.**

Wie in Abb. 18 gezeigt, ist es bevorzugt, dass zwei Kammern (bspw. eine Detektionskammer **3** bzw. Referenzkammer **5)** mittels einer Trennwand **38** voneinander derart getrennt werden, so dass ein Gasfluss **44** lediglich durch eine oder mehrere wohldefinierte Aperturen **18** ermöglicht wird.

Ein Druckausgleich zwischen der ersten Kammer ($V_1$, $P_1$) und der zweiten Kammer ($V_2$, $P_2$), erfin-

dungsgemäß aufgrund einer photoakustischen Anregung von Gasmolekülen in einer der Kammern, wird daher zielgerichtet durch die Apertur in Form eines (ventilierenden) Gasfluss erfolgen. Mittels des MEMS Sensors kann der Gasfluss beispielsweise als Modulation eines Wärmeflusses über die Apertur oder anhand eines kühlenden Effektes eines Heizelementes schnell und präzise ermittelt werden.

Vorteilhaft kann durch die Wahl einer besonders kleinen Querschnittsfläche der Apertur zudem gewährleistet werden, dass selbst bei sehr gering ausgeprägten PAS-Signalen hinreichend hohe Durchflussgeschwindigkeiten durch die Apertur auftreten können, um zuverlässig die PAS-Signale zu detektieren. Die mögliche Implementation kleiner Aperturen im Rahmen einer MEMSbasierten Fertigung erlaubt somit sowohl eine hohe Sensitivität als eine weitere Miniaturisierung photoakustische Gassensoren.

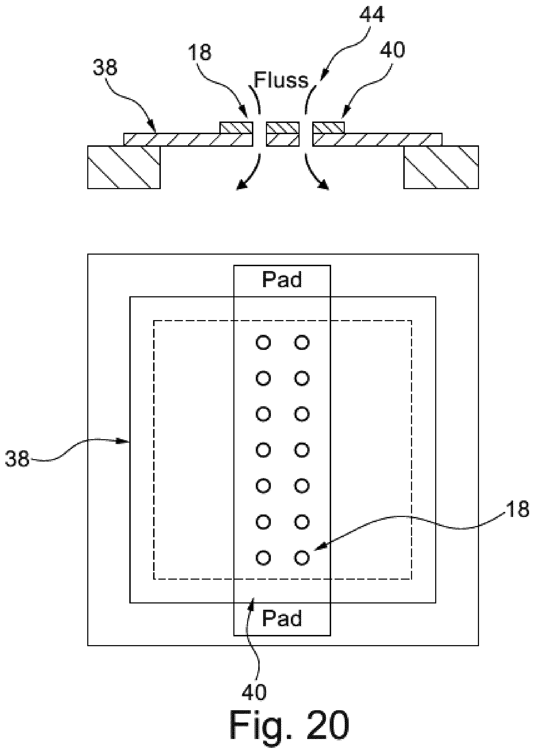

Abbildungen 19 und 20 illustrieren bevorzugte Ausführungsformen in den eine Vielzahl von Aperturen in die Trennwand bzw. Membran **38** eingebracht werden, um die Messgenauigkeit zu erhöhen.

In der Abbildung 20 gezeigten Ausführungsform umfasst der Sensor ein Heizelement **40** umfasst, welches bevorzugt als flächiges Pad aufgeführt ist und auf der Trennwand **38** installiert vorliegt. Das Heizelement **40** umfasst eine Vielzahl von Öffnungen, die zu den Aperturen **18** der Trennwand korrespondieren. Ein Gasfluss durch die Aperturen **18** führt zu einem Abkühlen des Heizelementes **40,** welches beispielsweise mittels eines Temperatursensors (nicht gezeigt) gemessen werden kann. Durch die Bereitstellung einer Vielzahl von Aperturen auf der Trennwand **38** bzw. Membran kann der kühlende Effekt des Gasflusses verstärkt und das Signal-zu-Rausch Verhältnis verbessert werden.

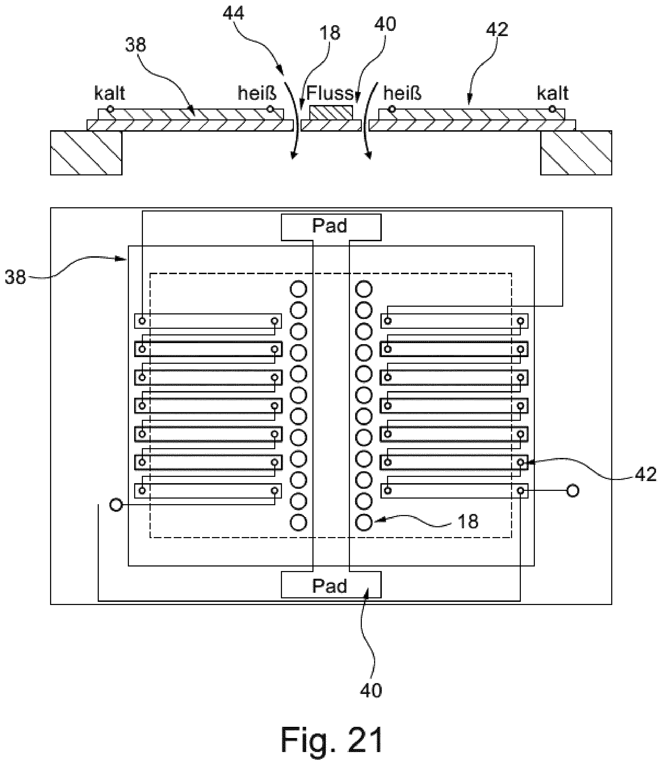

In der Abbildung 21 wird eine Ausführungsform illustriert, bei welcher der Sensor ein Heizelement **40,** welches als flächiges Pad ausgeführt ist, umfasst sowie eine Vielzahl von Temperatursensoren **42,** welche bevorzugt als Thermosäulen ausgestaltet sind. Das Heizelement **40** und die Temperatursensoren **42,** liegen derart auf der Trennwand **38** bzw. Membran installiert vor, dass sich jeweils Aperturen **18** zwischen dem Heizelement **40** und der Vielzahl an Temperatursensoren **42** befinden.

Wie obig erläutert, ist der Wärmestrom vom zentralen Heizelement **40** zu den Temperatursensoren **42** sensitiv gegenüber einem Gasfluss **44** durch die Apertur 18. Die Modulation des Wärmestroms durch den Gasfluss **44** kann bevorzugt mittels einer Thermosäule ermittelt werden, welche präzise die Temperaturdifferenz zwischen einem Kontaktpunkt *(hot junction)* in unmittelbarer Nähe zur Apertur **18** und dem vom Heizelement **40** abgewandten Ende der Thermosäule bestimmt.

Abbildung 22 zeigt einen aus zwei gebondeten Waferlagen hergestellten Gassensor 1, in welchem der beschriebene Sensor integriert vorliegt. Der untere Systemwafer **21** (grau) enthält Kavitäten und das Sensorelement. Es können ebenso lateral abgeleitete Anschlusspads für etwaige Elektronik zur Auslesung des Sensors sowie optionale durchstimmbare IR Filter auf der Unterseite vorhanden sein. Der Deckelwafer **23** (grün) enthält komplementäre Kavitäten. Beide Wafer sind vorzugsweise mittels Waferbondtechnik (ggf. hermetisch) aufeinander gebondet. Die in den Abbildungen 7-17 gezeigten Herstellungsschritte für eines Gassensors aus zwei Waferlagen, können in analoger Weise angewendet werden.

Im erhaltenen Gassensor **1** sind die Detektionskammer 3 *(Volume* 1) und Referenzkammer **5** *(Volume* 2) durch eine Trennmembran **38** voneinander gasdicht abgeschlossen. Innerhalb der Trennmembran **38** liegt mindestens eine Apertur **18** vor, durch welche ein Gasfluss zwischen den Kammern ermöglicht wird. Die mit einer Modulationsfrequenz moduliert IR-Strahlung **11** beaufschlagt bevorzugt die Detektionskammer *(Volume 1).*

Erfolgt die modulierte Bestrahlung mit einer Infrarotwellenlänge, welche dem Absorptionsspektrum eines in dem Gasgemisch befindlichen Moleküls einer Gaskomponente entspricht, findet eine modulierte Absorption statt, die zu Erwärmungs- und Abkühlungsprozessen führt, deren Zeitskalen die Modulationsfrequenz der Strahlung widerspiegeln. Gemäß dem photoakustischen Effekt führen die Erwärmungs- und Abkühlungsprozesse zu Expansionen und Kontraktion der Gaskomponente wodurch die Gaskomponente zur Ausbildung von Schalldruckwellen mit im Wesentlichen der Modulationsfrequenz angeregt wird. Die Schalldruckwellen sind als Gasfluss **44** durch die Apertur **18** mittels des Sensors messbar.

Der Sensor umfasst ein Heizelement **40** sowie einen Temperatursensor **42,** welcher beispielsweise als Thermosäule ausgestaltet sein kann, welche auf der Trennmembran 38 derart angeordnet vorliegen, dass sich zwischen ihnen die Apertur **18** befindet.

Wie obig erläutert, führt der Gasfluss **44** durch die Apertur **18** im Falle eines PAS-Signals zu einer Modulation des Wärmetransportes zwischen Heizelement **40** und dem Temperatursensor **42,** welche eine schnelle und zuverlässige Detektion ermöglicht.

Die Modulation des Wärmetransportes durch den Gasfluss **44** stellt vorteilhaft ein besonders sensitives Maß zur Bestimmung von PAS-Signales dar, welche insbesondere durch Optimierung der Dimensionierung der Aperturen **18,** des Wärmewiderstandes der Trennwand **38** bzw. Membran sowie der Wärmekapazität der Thermoelemente einer Thermosäule **42** weiter optimiert werden können.

Abbildung 23 illustriert schematischen eine Modellierungsansatz zur Optimierung des Signal-Rausch-Verhältnis des beschriebenen Sensors, welche anhand eines Gasflusses durch die Apertur einer Trennwand die Erzeugung von (Schall-)Druckwellen bzw. PAS-Signalen messen kann.

Die akustische Dynamik eines derartigen Sen-

sors hängt bevorzugt zum einen von dem akustischen Widerstrandes der Apertur: $R_{aperture} = \frac{3\eta}{r^3}$ ab, mit als dynamische Viskosität des Gases und r als Radius der Apertur, wobei sich im Falle einer Vielzahl *n* von Aperturen der Gesamtwiderstand als $R_{total} = R_{aperture}/n$ ergibt.

Zum anderen ist die Dynamik durch die akustische Kapazität $C_A = \frac{V}{\rho\, c^2}$ gekennzeichnet, wobei V das Volumen einer jeweiligen Kammer bezeichnet, $\rho$ die Dichte des Gases und c die Schallgeschwindigkeit (vgl. Sattler, Robert; Physikalisch basierte Mixed-Level Modellierung von gedämpften elektromechanischen Mikrosystemen; Dissertation; Technische Universität München, 2007).

Die charakterliche Zeitkonstante $\tau$ für die Bestimmung einer zeitabhängigen (Schall-) Druckänderungen p(t) in einem ersten Volumen mittels des Sensors, lässt sich als das Produkt des akustischen Widerstandes $R_{total}$ und der Kapazität des zweiten Volumen $C_2$ wie folgt berechnen:

$$\tau = R_{total}C_2 = \frac{3\eta}{n\, r^3}\frac{V_2}{\rho\, c^2}$$

Für den Beispielfall von n=20 Aperturen mit einem Radius r = 5 $\mu$m sowie einem Volumen der Referenzkammer von 1 mm$^3$, kann für luftähnliche Gase ($\eta$=1.8E-5 kg/m/s, $\rho$=1.23 kg/m$^3$, c=340 m/s) eine charakteristische Zeitkonstante $\tau$ von 0.15 ms erhalten werden.

Schalldruckänderungen mit Frequenzen von mehreren Hundert Herz können somit problemlos aufgelöst werden. Das beschriebene Sensorprinzip eignet sich somit in hohem Maße für die photoakustische Spektroskopie, bei der typischerweise Modulationsfrequenz eines anregenden IR-Emitters von einigen Hz bis 100 Hz eingesetzt werden. Auch hochfrequentere Modulation werden zuverlässig detektiert.

Vorteilhaft ist das Signal-zu-Rausch über einen weiteren Frequenzbereich für eine hinreichende Messgenauigkeit geeignet. Als Faktoren für einen Rauschen kommt u.a. der akustische Widerstand der Apertur, des Heizelementes oder aber des Sensors in Betracht. Weitere Rauschfaktoren betreffen den *Johnson noise* $V_{rms} = \sqrt{4\, k_B T\, R_{el,\, th,\, mech}\Delta f}$ oder zusätzliche Rauschsignaturen in Bezug auf den Wärmetransport über die Apertur.

In bevorzugten Ausführungsformen werden die Rauschfaktoren modelliert, um anhand einer Minimierung dominierender Rauschfaktoren eine zusätzlich verbesserte Auflösung des photoakustischen Gassensors zu erreichen.

## BEZUGSZEICHENLISTE

| | |
|---|---|
| 1 | Gassensor |
| 3 | Detektionskammer |
| 5 | Referenzkammer |
| 7 | Sensorkanal |
| 9 | IR-Emitter |
| 11 | IR-Strahlung |
| 13 | Messstrecke |
| 15 | Öffnung zur Detektionskammer |
| 16 | Durchstimmbarer Filter |
| 17 | Durchflusssensor |
| 18 | Apertur |
| 19 | Kapazitives Mikrofon |
| 20 | MEMS-Membran/Elektrode |
| 21 | Systemwafer |
| 22 | Gegenelektrode |
| 23 | Deckelwafer |
| 25 | Substrat/Wafer für Systemwafer |
| 27 | Oxidschicht |
| 29 | Polysiliziumschicht |
| 31 | Geätzte Kavität |
| 33 | Durchkontaktierung/Leiterbahn |
| 35 | Substrat/Wafer für Deckelwafer |
| 36 | Heizdraht für ein Anemometer |
| 37 | Piezoelektrischer Biegebalken |
| 38 | Trennwand, bevorzugt Membran |
| 40 | Heizelement |
| 42 | Temperatursensor, beispielsweise Thermosäule |
| 44 | Gasfluss |
| 46 | Substrat mit optionalem IR-Fenster oder Einlass-/Auslassöffnungen |
| 48 | Gehäuse |

## LITERATURVERZEICHNIS

[1] von Huber, J.: Miniaturisierter photoakustischer Gassensor für den Nachweis von Kohlendioxid, Der Andere Verlag, 2016

**Patentansprüche**

1. Photoakustischer Gassensor (1), umfassend

   - einen modulierbaren Infrarot-Emitter (9),
   - eine mit Gas befüllbare Detektionskammer (3),
   - eine Referenzkammer (5),
   - einen Sensorkanal (7), welcher die Detektionskammer (3) mit der Referenzkammer (5) verbindet sowie
   - einen Sensor, welcher sich im Sensorkanal (7) befindet oder an den Sensorkanal (7) angrenzt,

wobei die Detektionskammer (3) im Strahlengang des Infrarot-Emitters (9) vorliegt, sodass der Infrarot-Emitter (9) mittels modulierbar emittierbarer Infrarotstrahlung (11) Gas in der Detektionskammer (3) zur Ausbildung von Schalldruck anregen kann und ein Ausgleich des Schalldrucks durch den Sensorkanal (7) in die Referenzkammer (5) im Sensorkanal (7) mittels des Sensors detektierbar ist,

wobei die Detektionskammer (3), der Sensorkanal (7), die Referenzkammer (5) sowie der Sensor in einer lateralen Ebene angeordnet vorliegen, welche im Wesentlichen senkrecht zur Strahlungsrichtung des Infrarot-Emitters (9) verläuft,

wobei die Detektionskammer (3), der Sensorkanal (7), die Referenzkammer (5) sowie der Sensor in einem mehrlagigen Substrat gebildet werden und wobei die Referenzkammer (5) und der Sensorkanal (7) mit dem Sensor nicht im Strahlengang des Infrarot-Emitters (9) vorliegen ,

wobei das mehrlagige Substrat im Wesentlichen senkrecht zur Strahlungsrichtung des Infrarot-Emitters (9) angeordnet ist und durch Bonden mindestens zweier Wafer gebildet wird und

wobei ein unterer Systemwafer (21) den Sensor umfasst sowie mindestens eine untere Kavität (31) und ein oberer Deckelwafer (23) zu der mindestens einen unteren Kavität (31) zwei komplementäre obere Kavitäten (31) aufweist, sodass durch Bonden des unteren Systemwafers (21) und des oberen Deckelwafers (23) die Referenzkammer (5) und Detektionskammer (3) gebildet werden.

2. Photoakustischer Gassensor (1) gemäß Anspruch 1
**dadurch gekennzeichnet, dass**

die Detektionskammer (3) und/oder die Referenzkammer (5) eine Höhe von 10 $\mu$m bis 2 mm, bevorzugt von 50 $\mu$m bis 1 mm, besonders bevorzugt von 100 $\mu$m bis 500 $\mu$m aufweist und/oder

eine Länge oder Breite von 100 $\mu$m bis 5 mm, bevorzugt von 200 $\mu$m bis 3 mm, besonders bevorzugt von 500 $\mu$m bis 2mm aufweist.

3. Photoakustischer Gassensor (1) gemäß einem der vorherigen Ansprüche
**dadurch gekennzeichnet, dass**
der Sensorkanal (7) eine Länge von 1 $\mu$m bis 500 $\mu$m, bevorzugt von 10 $\mu$m bis 200 $\mu$m, besonders bevorzugt von 10 $\mu$m bis 100 $\mu$m und/oder einen Querschnitt von 1 $\mu$m$^2$ bis 250 000 $\mu$m$^2$, bevorzugt

von 100 $\mu$m$^2$ bis 25 000 $\mu$m$^2$ aufweist.

4. Photoakustischer Gassensor (1) gemäß einem der vorherigen Ansprüche
**dadurch gekennzeichnet, dass**
der Sensor ein Schalldruckdetektor ist, wobei der Schalldruckdetektor bevorzugt einen kapazitiv oder optisch auslesbaren, piezoelektrischen, piezoresistiven und/oder magnetischen Balken und/oder ein kapazitives (19), piezoelektrischen, piezoresistives und/oder optisches Mikrofon umfasst.

5. Photoakustischer Gassensor (1) gemäß einem der vorherigen Ansprüche
**dadurch gekennzeichnet, dass**
der Sensor ein kapazitives Mikrofon (19) ist, umfassend eine MEMS-Membran (20) als Elektrode sowie eine Gegenelektrode (22) und wobei die MEMS-Membran (20) bevorzugt eine maximale Ausdehnung in mindestens eine Richtung aufweist von 100 $\mu$m bis 1500 $\mu$m, insbesondere 200 bis 1000 $\mu$m.

6. Photoakustischer Gassensor (1) gemäß einem der vorherigen Ansprüche
**dadurch gekennzeichnet, dass**

der Sensor ein Durchflusssensor (17) ist, bevorzugt ein thermischer Durchflusssensor, ein Hitzedraht-Anemometer, ein thermoelektrisches Anemometer, ein resistives Anemometer und/oder ein Ultraschallanemometer,

wobei bevorzugt der Durchflusssensor (17) in dem Sensorkanal (7) vorliegt und eine Apertur (18) bildet, welche bevorzugt eine maximale Ausdehnung in mindestens eine Richtung von 100 $\mu$m bis 1500 $\mu$m, insbesondere von 200 $\mu$m bis 1000 $\mu$m aufweist.

7. Photoakustischer Gassensor (1) gemäß einem der vorherigen Ansprüche
**dadurch gekennzeichnet, dass**
die Detektionskammer (3) und die Referenzkammer (5) mindestens teilweise durch eine Trennwand (38), vorzugsweise eine Trennmembran (38), getrennt sind, welche mindestens eine Apertur (18) aufweist, welche den Sensorkanal (7) bildet und wobei der Sensor mindestens teilweise auf der Trennwand (38) angeordnet vorliegt und dafür eingerichtet ist, einen Gasfluss (44) zwischen der Detektionskammer (3) und Referenzkammer (5) durch die mindestens eine Apertur (18) zu messen.

8. Photoakustischer Gassensor (1) gemäß Anspruch 7
**dadurch gekennzeichnet, dass**
der Sensor mindestens ein Heizelement (40) sowie mindestens einen Temperatursensor (42) umfasst, welche derart auf der Trennwand (38) installiert vorliegen, dass die mindestens eine Apertur (18) sich zwischen dem Heizelement (40) und dem mindestens einen Temperatursensor (42) befindet, sodass ein Gasfluss (44) zwischen Detektionskammer (3) und Referenzkammer (5) durch die mindestens eine Apertur (18) anhand einer Modulation eines Wärmestroms entlang der Trennwand zwischen dem Heizelement (40) und dem mindestens einen Temperatursensor (42) messbar ist.

9. Photoakustischer Gassensor (1) gemäß Anspruch 7 **dadurch gekennzeichnet, dass**
der Sensor mindestens ein Heizelement (40) umfasst, welches zu der mindestens einen Apertur (18) korrespondierende Öffnungen aufweist und auf der Trennwand (38) installiert vorliegt und wobei ein Gasfluss zwischen Detektionskammer (3) und Referenzkammer (5) durch die mindestens eine Apertur (18) sowie die korrespondierende Öffnung des Heizelementes (40) anhand einer Kühlung des Heizelementes (40) messbar ist.

10. Photoakustischer Gassensor (1) gemäß einem der vorherigen Anspruch 7-9 **dadurch gekennzeichnet, dass**

die Trennwand (38) mindestens 2, 3, 4, 5, 6, 7, 8, 9, 10 oder mehr Aperturen (18) aufweist und/oder
die mindestens eine Apertur (18) eine Querschnittsfläche zwischen 1 $\mu m^2$ und 10 000 $\mu m^2$, bevorzugt 5 $\mu m^2$ und 1000 $\mu m^2$, besonders bevorzugt 10 $\mu m^2$ und 100 $\mu m^2$ aufweist.

11. Photoakustischer Gassensor (1) gemäß einem der vorherigen Ansprüche **dadurch gekennzeichnet, dass**
die Detektionskammer (3), der Sensorkanal (7) und die Referenzkammer (5) ein geschlossenes System bilden, welches mit einem Referenzgas gefüllt ist und ein zu analysierendes Gas im Strahlengang zwischen dem Infrarot-Emitter (9) und der Detektionskammer (3) vorliegt, sodass der Anteil des Referenzgases im zu analysierenden Gas anhand der Ausbildung von Schalldruckwellen in der Detektionskammer (3) messbar ist.

12. Photoakustischer Gassensor (1) gemäß einem der vorherigen Ansprüche **dadurch gekennzeichnet, dass**
die Detektionskammer (3) ein offenes System darstellt, welches eine oder mehrere Öffnungen (15) aufweist, sodass ein zu analysierendes Gas in die Detektionskammer (3) einströmen oder diffundieren kann, wobei die Detektionskammer (3) bevorzugt zwei oder mehr Öffnungen (15) aufweist mit einer maximalen Ausdehnung in mindestens eine Richtung von 1 nm bis 500 $\mu m$.

13. Photoakustischer Gassensor (1) gemäß einem der vorherigen Ansprüche **dadurch gekennzeichnet, dass**
der Infrarot-Emitter (9) eine wellenlängenselektive Abstrahlung erlaubt und/oder im Strahlengang zwischen dem Infrarot-Emitter (9) und der Detektionskammer (3) ein wellenlängenselektiver Filter (16), beispielsweise eine Fabry-Perot-Filter, vorliegt.

14. Verfahren zur Herstellung eines photoakustischen Gassensors (1) gemäß einem der vorherigen Ansprüche umfassend die Schritte

- Bereitstellen mindestens zweier Substratlagen
- Aufbringen mindestens einer Lage eines leitfähigen Materials auf einer ersten Substratlage und/oder Strukturierung eines leitfähigen Materials auf der ersten Substratlage zur Bildung eines MEMS-Sensors
- Ätzen von Kavitäten (31) in der ersten und/oder zweiten Substratlage
- Bonden der ersten Substratlage mit der zweiten Substratlage zur Bildung der Detektionskammer (3), der Referenzkammer (5) und des Sensorkanals (7), wobei der Sensorkanal (7) die Detektionskammer (3) mit der Referenzkammer (5) verbindet und in dem Sensorkanal (7) der Sensor integriert vorliegt oder an den Sensorkanal (7) angrenzt.

15. Verfahren zur Analyse von Gas, umfassend

a. Bereitstellung eines photoakustischen Gassensors (1) zur Analyse von Gas gemäß einem der vorherigen Ansprüche 1-13
b. Bereitstellung eines zu analysierenden Gases im Strahlengang zwischen dem Infrarot-Emitter (9) und der Detektionskammer (3) oder innerhalb der Detektionskammer (3)
c. Bestrahlung des zu analysierenden Gases und der Detektionskammer (3) mit einer mit einer Modulationsfrequenz modulierten Infrarotstrahlung (11) zur Erzeugung von Schalldruckwellen
d. Messung der erzeugten Schalldruckwellen mittels des Sensors
e. Charakterisierung des zu analysierenden Gases anhand der Messergebnisse.

**Claims**

1. Photoacoustic gas sensor (1) comprising

- a modulable infrared emitter (9),
- a gas-fillable detection chamber (3),
- a reference chamber (5),
- a sensor channel (7) connecting the detection chamber (3) to the reference chamber (5), and
- a sensor which is located in the sensor channel (7) or is adjacent to the sensor channel (7),

wherein the detection chamber (3) is present in the beam path of the infrared emitter (9) such that the infrared emitter (9) can excite gas in the detection chamber (3) by means of modulably emittable infrared radiation (11) to generate a sound pressure and an equalization of the sound pressure through the sensor channel (7) into the reference chamber (5) can be detected in the sensor channel (7) by means of the sensor, wherein the detection chamber (3), the sensor channel (7), the reference chamber (5) and the sensor are arranged in a lateral plane which is substantially perpendicular to the radiation direction of the infrared emitter (9), wherein the detection chamber (3), the sensor channel (7), the reference chamber (5) and the sensor element are formed in a multilayer substrate, wherein the reference chamber (5) and the sensor channel (7) with the sensor are not located in the beam path of the infrared emitter (9), the multilayer substrate is arranged substantially perpendicular to the radiation direction of the infrared emitter (9) and formed by bonding at least two wafers and wherein a lower system wafer (21) comprises the sensor and exhibits at least one lower cavity (31) and an upper cap wafer (23) comprises two upper cavities (31) complementary to the at least one lower cavity (31) such that the reference chamber (5) and detection chamber (3) are formed by bonding the lower system wafer (21) and the upper cap wafer (23).

2. Photoacoustic gas sensor (1) according to claim 1
   **characterized in that**
   the detection chamber (3) and/or the reference chamber (5) has a height of from 10 $\mu$m to 2 mm, preferably from 50 $\mu$m to 1 mm, particularly preferably from 100 $\mu$m to 500 $\mu$m and/or a length or width of from 100 $\mu$m to 5 mm, preferably from 200 $\mu$m to 3 mm, particularly preferably from 500 $\mu$m to 2mm.

3. Photoacoustic gas sensor (1) according to one of the preceding claims
   **characterized in that**
   the sensor channel (7) has a length of from 1 $\mu$m to 500 $\mu$m, preferably from 10 $\mu$m to 200 $\mu$m, more preferably from 10 $\mu$m to 100 $\mu$m and/or a cross-section of from 1 $\mu$m$^2$ to 250 000 $\mu$m$^2$, preferably

from 100 $\mu$m$^2$ to 25 000 $\mu$m$^2$.

4. Photoacoustic gas sensor (1) according to one of the preceding claims
   **characterized in that**
   the sensor is a sound pressure detector, wherein the sound pressure detector preferably comprises a capacitively or optically readable piezoelectric, piezoresistive and/or magnetic cantilever and/or a capacitive (19), piezoelectric, piezoresistive and/or optical microphone.

5. Photoacoustic gas sensor (1) according to one of the preceding claims.
   **characterized in that**
   the sensor is a capacitive microphone (19) comprising a MEMS membrane (20) as an electrode as well as a counter electrode (22) and wherein the MEMS membrane (20) preferably has a maximum extension in at least one direction of 100 $\mu$m to 1500 $\mu$m, in particular 200 to 1000 $\mu$m.

6. Photoacoustic gas sensor (1) according to one of the preceding claims
   **characterized in that**
   the sensor is a flow sensor (17), preferably a thermal flow sensor, a hot wire anemometer, a thermoelectric anemometer, a resistive anemometer and/or an ultrasonic anemometer, wherein preferably the flow sensor (17) is located in the sensor channel (7) and forms an aperture (18) which preferably has a maximum extension in at least one direction of from 100 $\mu$m to 1500 $\mu$m, in particular from 200 $\mu$m to 1000 $\mu$m.

7. Photoacoustic gas sensor (1) according to one of the preceding claims
   **characterized in that**
   the detection chamber (3) and the reference chamber (5) are at least partially separated by a partition (38), preferably a separating membrane (38), having at least one aperture (18) forming the sensor channel (7) and wherein the sensor is at least partially arranged on the partition (38) and is adapted to measure a gas flow (44) between the detection chamber (3) and reference chamber (5) through the at least one aperture (18).

8. Photoacoustic gas sensor (1) according to claim 7
   **characterized in that**
   the sensor comprises at least one heating element (40) and at least one temperature sensor (42), which are installed on the partition (38) such that the at least one aperture (18) is located between the heating element (40) and the at least one temperature sensor (42), such that a gas flow (44) between the detection chamber (3) and the reference chamber (5) is measurable through the at least one aperture (18) based on a modulation of a heat flow along the partition (38) between the heating element (40) and the at least one temperature sensor (42).

9. Photoacoustic gas sensor (1) according to claim 7 **characterized in that**
   the sensor comprises at least one heating element (40), which has openings corresponding to the at least one aperture (18) and is installed on the partition (38), and wherein a gas flow between the detection chamber (3) and the reference chamber (5) through the at least one aperture (18) and the corresponding opening of the heating element (40) can be measured by means of a cooling of the heating element (40).

10. Photoacoustic gas sensor (1) according to one of the preceding claims 13-15 **characterized in that**

    the partition (38) has at least 2, 3, 4, 5, 6, 7, 8, 9, 10 or more apertures (18)
    the at least one aperture (18) has a cross-sectional area between 1 $\mu m^2$ and 10 000 $\mu m^2$, preferably 5 $\mu m^2$ and 1000 $\mu m^2$, more preferably 10 $\mu m^2$ and 100 $\mu m^2$.

11. Photoacoustic gas sensor (1) according to one of the preceding claims **characterized in that**
    the detection chamber (3), the sensor channel (7) and the reference chamber (5) form a closed system which is filled with a reference gas and a gas to be analyzed is present in the beam path between the infrared emitter (9) and the detection chamber (3), so that the proportion of the reference gas in the gas to be analyzed can be measured on the basis of the formation of sound pressure waves in the detection chamber (3).

12. Photoacoustic gas sensor (1) according to one of the preceding claims **characterized in that**

    the detection chamber (3) is an open system having one or more openings (15) such that a gas to be analyzed can flow or diffuse into the detection chamber (3),
    the detection chamber (3) preferably has two or more openings (15) with a maximum extension in at least one direction of 1 nm to 500 $\mu m$.

13. Photoacoustic gas sensor (1) according to one of the preceding claims **characterized in that**
    the infrared emitter (9) permits wavelength-selective radiation and/or a wavelength-selective filter (16), for example a Fabry-Perot filter, is located in the beam path between the infrared emitter and the detection chamber.

14. Method of manufacturing a photoacoustic gas sensor (1) according to one of the preceding claims comprising the steps of

    - providing at least two substrate layers
    - depositing at least one layer of a conductive material on a first substrate layer and/or structuring a conductive material on the first substrate layer to form a MEMS sensor
    - etching cavities (31) in the first and/or second substrate layer
    - bonding the first substrate layer to the second substrate layer to form the detection chamber (3), the reference chamber (5) and the sensor channel (7), wherein the sensor channel (7) connects the detection chamber (3) to the reference chamber (5) and the sensor is integrated in the sensor channel (7) or is adjacent to the sensor channel (7).

15. A method for analyzing gas comprising

    a. providing a photoacoustic gas sensor (1) for analyzing gas according to any of the preceding claims 1-13
    b. providing a gas to be analyzed in the beam path between the infrared emitter (9) and the detection chamber (3) or within the detection chamber (3)
    c. irradiating the gas to be analyzed and the detection chamber (3) with infrared radiation (11) modulated with a modulation frequency in order to generate sound pressure waves
    d. measuring the generated sound pressure waves by means of the sensor
    e. Characterization of the gas to be analyzed based on the measurement results.

## Revendications

1. Capteur de gaz photoacoustique (1), comprenant

   - un émetteur infrarouge modulable (9),
   - une chambre de détection (3) pouvant être remplie de gaz,
   - une chambre de référence (5),
   - un canal de capteur (7) qui relie la chambre de détection (3) à la chambre de référence (5) et
   - un capteur qui se trouve dans le canal de capteur (7) ou qui est adjacent au canal de capteur (7),

     dans lequel la chambre de détection (3) est située dans le trajet de faisceau de l'émetteur infrarouge (9), de sorte que l'émetteur infrarouge (9) peut stimuler le gaz dans la chambre de détection (3) pour former une pression acoustique au moyen d'un rayonnement infrarouge pouvant être émis de manière modulable (11) et qu'une compensation de la pression acoustique peut être détectée à travers le canal de capteur (7) dans la chambre de référence (5) dans le canal de capteur (7) au moyen du capteur, dans lequel la chambre de détection (3), le canal de capteur (7), la chambre de référence (5) et le capteur sont disposés dans un plan latéral qui s'étend sensiblement perpendiculairement à la direction de rayonnement de l'émetteur infrarouge (9), dans lequel la chambre de détection (3), le canal de capteur (7), la chambre de référence (5) et le capteur sont formés dans un substrat multicouche, dans lequel la chambre de référence (5) et le canal de capteur (7) avec le capteur ne sont pas situés dans le trajet de faisceau de l'émetteur infrarouge (9), dans lequel le substrat multicouche est disposé sensiblement perpendiculairement à la direction de rayonnement de l'émetteur infrarouge et est formé par collage d'au moins deux tranches, et dans lequel une tranche de système inférieure (21) comprend le capteur et au moins une cavité inférieure (31) et une tranche de couvercle supérieure (23) présentent deux cavités supérieures (31) complémentaires à l'au moins une cavité inférieure (31), de sorte que la chambre de référence (5) et la chambre de détection (3) sont formées en collant la tranche de système inférieure (21) et la tranche de couvercle supérieure (23).

**2.** Capteur de gaz photoacoustique (1) selon la revendication 1
**caractérisé en ce que**

la chambre de détection (3) et/ou la chambre de référence (5) a une hauteur de 10 $\mu$m à 2 mm, de préférence de 50 $\mu$m à 1 mm, idéalement de 100 $\mu$m à 500 $\mu$m et/ou a une longueur ou une largeur de 100 $\mu$m à 5 mm, de préférence de 200 $\mu$m à 3 mm, idéalement de 500 $\mu$m à 2 mm.

**3.** Capteur de gaz photoacoustique (1) selon l'une des revendications précédentes
**caractérisé en ce que**
le canal de capteur (7) a une longueur de 1 $\mu$m à 500 $\mu$m, de préférence de 10 $\mu$m à 200 $\mu$m, idéalement

de 10 $\mu$m à 100 $\mu$m et/ou une section transversale de 1 $\mu$m$^2$ à 250000 $\mu$m$^2$, de préférence de 100 $\mu$m$^2$ à 25 000 $\mu$m$^2$.

**4.** Capteur de gaz photoacoustique (1) selon l'une des revendications précédentes
**caractérisé en ce que**
le capteur est un détecteur de pression acoustique, dans lequel le détecteur de pression acoustique comprend de préférence une barre piézoélectrique, piézorésistive et/ou magnétique à lecture capacitive ou optique et/ou un microphone capacitif (19), piézoélectrique, piézorésistif et/ou optique.

**5.** Capteur de gaz photoacoustique (1) selon l'une des revendications précédentes
**caractérisé en ce que**
le capteur est un microphone capacitif (19), comprenant une membrane MEMS (20) comme électrode et une contre-électrode (22), et dans lequel la membrane MEMS (20) présente de préférence une extension maximale dans au moins une direction de 100 $\mu$m à 1500 $\mu$m, en particulier de 200 à 1000 $\mu$m.

**6.** Capteur de gaz photoacoustique (1) selon l'une des revendications précédentes
**caractérisé en ce que**

le capteur est un capteur de débit (17), de préférence un capteur de débit thermique, un anémomètre à fil chaud, un anémomètre thermoélectrique, un anémomètre résistif et/ou un anémomètre à ultrasons, dans lequel le capteur de débit (17) est situé de préférence dans le canal de capteur (7) et forme une ouverture (18) qui présente de préférence une extension maximale dans au moins une direction de 100 $\mu$m à 1500 $\mu$m, en particulier de 200 $\mu$m à 1000 $\mu$m.

**7.** Capteur de gaz photoacoustique (1) selon l'une des revendications précédentes
**caractérisé en ce que**
la chambre de détection (3) et la chambre de référence (5) sont au moins partiellement séparées par une cloison (38), de préférence une membrane de séparation (38), qui présente au moins une ouverture (18), laquelle forme le canal de capteur (7) et dans lequel le capteur est au moins partiellement disposé sur la cloison (38) et est conçu pour mesurer un écoulement de gaz (44) entre la chambre de détection (3) et la chambre de référence (5) à travers l'au moins une ouverture (18).

**8.** Capteur de gaz photoacoustique (1) selon la revendication 7
**caractérisé en ce que**
le capteur comprend au moins un élément chauffant (40) et au moins un capteur de température (42), qui sont installés sur la cloison (38) de sorte que l'au moins une ouverture (18) se trouve entre l'élément chauffant (40) et l'au moins un capteur de température (42) de sorte qu'un écoulement de gaz (44) entre la chambre de détection (3) et la chambre de référence (5) à travers l'au moins une ouverture (18) peut être mesuré sur la base d'une modulation d'un flux de chaleur le long de la cloison entre l'élément chauffant (40) et l'au moins un capteur de température (42).

9. Capteur de gaz photoacoustique (1) selon la revendication 7
   **caractérisé en ce que**
   le capteur comprend au moins un élément chauffant (40), qui présente des ouvertures correspondant à l'au moins une ouverture (18) et est installé sur la cloison (38), et dans lequel un écoulement de gaz entre la chambre de détection (3) et la chambre de référence (5) à travers l'au moins une ouverture (18) et l'ouverture correspondante de l'élément chauffant (40) peut être mesuré sur la base d'un refroidissement de l'élément chauffant (40).

10. Capteur de gaz photoacoustique (1) selon l'une des revendications précédentes 7 à 9,
    **caractérisé en ce que**

    la cloison (38) présente au moins 2, 3, 4, 5, 6, 7, 8, 9, 10 ouvertures (18) ou plus, et/ou l'au moins une ouverture (18) a une surface de section transversale comprise entre 1 $\mu m^2$ et 10000 $\mu m^2$, de préférence 5 $\mu m^2$ et 1000 $\mu m^2$, idéalement 10 $\mu m^2$ et 100 $\mu m^2$.

11. Capteur de gaz photoacoustique (1) selon l'une des revendications précédentes
    **caractérisé en ce que**
    la chambre de détection (3), le canal de capteur (7) et la chambre de référence (5) forment un système fermé qui est rempli d'un gaz de référence et un gaz à analyser est présent dans le trajet du faisceau entre l'émetteur infrarouge (9) et la chambre de détection (3), de sorte que la proportion du gaz de référence dans le gaz à analyser peut être mesurée sur la base de la formation d'ondes de pression acoustique dans la chambre de détection (3).

12. Capteur de gaz photoacoustique (1) selon l'une des revendications précédentes
    **caractérisé en ce que**
    la chambre de détection (3) représente un système ouvert qui présente une ou plusieurs ouvertures (15), de sorte qu'un gaz à analyser peut s'écouler ou diffuser dans la chambre de détection (3), dans lequel la chambre de détection (3) présente de préférence deux ouvertures (15) ou plus ayant une extension maximale dans au moins une direction de 1 nm à 500 $\mu m$.

13. Capteur de gaz photoacoustique (1) selon l'une des revendications précédentes
    **caractérisé en ce que**
    l'émetteur infrarouge (9) permet un rayonnement sélectif en longueur d'onde et/ou un filtre sélectif en longueur d'onde (16), par exemple un filtre Fabry-Pérot, est situé dans le trajet de faisceau entre l'émetteur infrarouge (9) et la chambre de détection (3).

14. Procédé de fabrication d'un capteur de gaz photoacoustique (1) selon l'une des revendications précédentes, comprenant les étapes de

    - fourniture d'au moins deux couches de substrat
    - application d'au moins une couche d'un matériau conducteur sur une première couche de substrat et/ou structuration d'un matériau conducteur sur la première couche de substrat pour former un capteur MEMS
    - gravure de cavités (31) dans la première et/ou la seconde couche de substrat
    - collage de la première couche de substrat à la seconde couche de substrat pour former la chambre de détection (3), la chambre de référence (5) et le canal de capteur (7), dans lequel le canal de capteur (7) relie la chambre de détection (3) à la chambre de référence (5) et dans le canal de capteur (7), le capteur est intégré ou adjacent au canal de capteur (7).

15. Procédé d'analyse de gaz, comprenant

    a. la fourniture d'un capteur de gaz photoacoustique (1) pour analyser un gaz selon l'une des revendications précédentes 1 à 13.
    b. la fourniture d'un gaz à analyser dans le trajet de faisceau entre l'émetteur infrarouge (9) et la chambre de détection (3) ou à l'intérieur de la chambre de détection (3)
    c. l'irradiation du gaz à analyser et de la chambre de détection (3) par un rayonnement infrarouge (11) modulé avec une fréquence de modulation pour générer des ondes de pression acoustique
    d. la mesure des ondes de pression acoustique générées à l'aide du capteur
    e. la caractérisation du gaz à analyser sur la base des résultats de mesure.

Fig. 1

Fig. 2

Fig. 3

Fig. 4

Fig. 5

Fig. 6

25

Fig. 7

Fig. 8

27

Fig. 9

29

Fig. 10

31

Fig. 11

Fig. 12

Fig. 13

Fig. 14

Fig. 15

Fig. 16

Fig. 17

Fig. 18

Fig.19

Fig. 20

Fig. 21

Fig. 22

Fig. 23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180059066 A1
- DE 202015002315
- WO 9624831 A1

**In der Beschreibung aufgeführte Nicht-Patentliteratur**

- **K. KERÄNEN et al.** Differential photo-acoustic gas cell based on LTCC for ppm gas sensing. *PROCEEDINGS OF SPIE*, 03 February 2010, vol. 7607, 1-4
- Physikalisch basierte Mixed-Level Modellierung von gedämpften elektromechanischen Mikrosystemen. **SATTLER, ROBERT**. Dissertation. Technische Universität, 2007
- **VON HUBER, J.** Miniaturisierter photoakustischer Gassensor für den Nachweis von Kohlendioxid. Der Andere Verlag, 2016